(19) **Europäisches Patentamt / European Patent Office / Office européen des brevets**

(11) **EP 3 780 410 A1**

(12) # EUROPEAN PATENT APPLICATION

(43) Date of publication:
**17.02.2021 Bulletin 2021/07**

(51) Int Cl.:
**H04B 7/0456** (2017.01)   **H04B 7/06** (2006.01)

(21) Application number: **19191582.6**

(22) Date of filing: **13.08.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FRAUNHOFER-GESELLSCHAFT zur Förderung der angewandten Forschung e.V. 80686 München (DE)**

(72) Inventors:
• **GROßMANN, Marcus**
 **91058 Erlangen (DE)**
• **RAMIREDDY, Venkatesh**
 **91058 Erlangen (DE)**
• **LANDMANN, Markus**
 **91058 Erlangen (DE)**

(74) Representative: **Zimmermann, Tankred Klaus et al Schoppe, Zimmermann, Stöckeler Zinkler, Schenk & Partner mbB Patentanwälte Radlkoferstrasse 2 81373 München (DE)**

(54) **CSI REPORTING AND CODEBOOK STRUCTURE FOR DOPPLER CODEBOOK-BASED PRECODING IN A WIRELESS COMMUNICATIONS SYSTEM**

(57) A communication device for providing channel state information, CSI, feedback in a wireless communication system is described. The communication device is to receive from a transmitter a radio signal via a time-variant, frequency-selective channel, the radio signal including reference signals according to a reference signal configuration comprising one or more ports, and signals comprising the reference signal configuration. The communication device is to estimate the channel using measurements on the reference signals on the radio channel, the reference signals provided over a configured number of frequency and time domain resources. The communication device is to select a precoder matrix ($W$), calculate either one or more of a channel quality indicator, CQI, and/or a precoder matrix indicator, PMI, and/or a rank indicator, RI, using the explicit CSI and the precoder matrix ($W$), and report to the transmitter the CSI feedback including either one or more of the CQI, and/or the PMI and/or the RI, wherein the PMI and RI are used to indicate the precoder matrix for the configured frequency resources, time domain resources and one or more ports. The precoder matrix includes a single codebook comprising one or more Doppler-frequency components of the precoder, or two codebooks, a first codebook and a second codebook, wherein the first codebook comprises one or more Doppler-frequency components of the precoder, and wherein the second codebook comprises one or more delay components of the precoder or one or more spatial beam components of the precoder, or three codebooks, a first codebook, a second codebook and a third codebook, wherein the first codebook comprises one or more Doppler-frequency components of the precoder, wherein the second codebook comprises one or more delay components of the precoder, and wherein the third codebook comprises one or more spatial beam components of the precoder.

EP 3 780 410 A1

**Description**

The present application concerns the field of wireless communications, more specifically to CSI reporting and a codebook structure for Doppler- and codebook-based precoding in a wireless communication system.

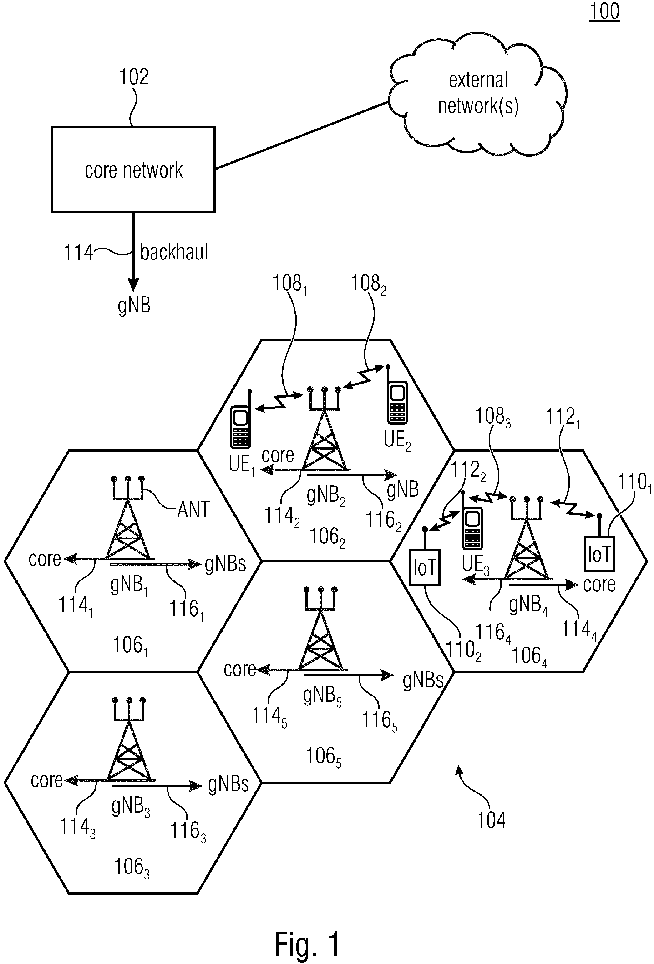

Fig. 1 is a schematic representation of an example of a terrestrial wireless network 100 including a core network 102 and a radio access network 104. The radio access network 104 may include a plurality of base stations $gNB_1$ to $gNB_5$, each serving a specific area surrounding the base station schematically represented by respective cells $106_1$ to $106_5$. The base stations are provided to serve users within a cell. The term base station, BS, refers to a gNB in 5G networks, eNB in UMTS/LTE/LTE-A/ LTE-A Pro, or just BS in other mobile communication standards. A user may be a stationary device or a mobile device. Further, the wireless communication system may be accessed by mobile or stationary IoT devices which connect to a base station or to a user. The mobile devices or the IoT devices may include physical devices, ground based vehicles, such as robots or cars, aerial vehicles, such as manned or unmanned aerial vehicles (UAVs), the latter also referred to as drones, buildings and other items or devices having embedded therein electronics, software, sensors, actuators, or the like as well as network connectivity that enables these devices to collect and exchange data across an existing network infrastructure. Fig. 1 shows an exemplary view of only five cells, however, the wireless communication system may include more such cells. Fig. 1 shows two users $UE_1$ and $UE_2$, also referred to as user equipment, UE, that are in cell $106_2$ and that are served by base station $gNB_2$. Another user $UE_3$ is shown in cell $106_4$ which is served by base station $gNB_4$. The arrows $108_1$, $108_2$ and $108_3$ schematically represent uplink/downlink connections for transmitting data from a user $UE_1$, $UE_2$ and $UE_3$ to the base stations $gNB_2$, $gNB_4$ or for transmitting data from the base stations $gNB_2$, $gNB_4$ to the users $UE_1$, $UE_2$, $UE_3$. Further, Fig. 1 shows two IoT devices $110_1$ and $110_2$ in cell $106_4$, which may be stationary or mobile devices. The IoT device $110_1$ accesses the wireless communication system via the base station $gNB_4$ to receive and transmit data as schematically represented by arrow $112_1$. The IoT device $110_2$ accesses the wireless communication system via the user $UE_3$ as is schematically represented by arrow $112_2$. The respective base station $gNB_1$ to $gNB_5$ may be connected to the core network 102, e.g. via the S1 interface, via respective backhaul links $114_1$ to $114_5$, which are schematically represented in Fig. 1 by the arrows pointing to "core". The core network 102 may be connected to one or more external networks. Further, some or all of the respective base station $gNB_1$ to $gNB_5$ may connected, e.g. via the S1 or X2 interface or XN interface in NR, with each other via respective backhaul links $116_1$ to 116s, which are schematically represented in Fig. 1 by the arrows pointing to "gNBs".

For data transmission a physical resource grid may be used. The physical resource grid may comprise a set of resource elements to which various physical channels and physical signals are mapped. For example, the physical channels may include the physical downlink, uplink and/or sidelink, SL, shared channels (PDSCH, PUSCH, PSSCH) carrying user specific data, also referred to as downlink, uplink or sidelink payload data, the physical broadcast channel (PBCH) carrying for example a master information block (MIB) and a system information block (SIB), the physical downlink, uplink and/or sidelink control channels (PDCCH, PUCCH, PSCCH) carrying for example the downlink control information (DCI), the uplink control information (UCI) or the sidelink control information (SCI). For the uplink, the physical channels may further include the physical random access channel (PRACH or RACH) used by UEs for accessing the network once a UE is synchronized and obtains the MIB and SIB. The physical signals may comprise reference signals or symbols (RS), synchronization signals and the like. The resource grid may comprise a frame or radio frame having a certain duration, like 10 milliseconds, in the time domain and having a given bandwidth in the frequency domain. The frame may have a certain number of subframes of a predefined length, e.g., 2 subframes with a length of 1 millisecond. Each subframe may include two slots of 6 or 7 OFDM symbols depending on the cyclic prefix (CP) length. A frame may also consist of a smaller number of OFDM symbols, e.g. when utilizing shortened transmission time intervals (sTTI) or a mini-slot/non-slot-based frame structure comprising just a few OFDM symbols.

The wireless communication system may be any single-tone or multicarrier system using frequency-division multiplexing, like the orthogonal frequency-division multiplexing (OFDM) system, the orthogonal frequency-division multiple access (OFDMA) system, or any other IFFT-based signal with or without CP, e.g. DFT-s-OFDM. Other waveforms, like non-orthogonal waveforms for multiple access, e.g. filter-bank multicarrier (FBMC), generalized frequency division multiplexing (GFDM) or universal filtered multi carrier (UFMC), may be used. The wireless communication system may operate, e.g., in accordance with the LTE-Advanced pro standard or the 5G or NR, New Radio, standard.

The wireless network or communication system depicted in Fig. 1 may by a heterogeneous network having two distinct overlaid networks, a network of macro cells with each macro cell including a macro base station, like base station $gNB_1$ to $gNB_5$, and a network of small cell base stations (not shown in Fig. 1), like femto- or pico-base stations. In addition to the above described terrestrial wireless network also non-terrestrial wireless communication networks exist including spaceborne transceivers, like satellites, and/or airborne transceivers, like unmanned aircraft systems. The non-terrestrial wireless communication network or system may operate in a similar way as the terrestrial system described above with reference to Fig. 1, for example in accordance with the LTE-advanced pro standard or the 5G or NR, new radio, standard.

In a wireless communication system like to one depicted schematically in Fig. 1, multi-antenna techniques may be used, e.g., in accordance with LTE or NR, to improve user data rates, link reliability, cell coverage and network capacity. To support multi-stream or multi-layer transmissions, linear precoding is used in the physical layer of the communication system. Linear precoding is performed by a precoder matrix which maps layers of data to antenna ports. The precoding may be seen as a generalization of beamforming, which is a technique to spatially direct or focus a data transmission towards an intended receiver. The precoder matrix to be used at the gNB to map the data to the transmit antenna ports is decided using channel state information, CSI.

In a wireless communication system as described above, such as LTE or New Radio (5G), downlink signals convey data signals, control signals containing downlink, DL, control information (DCI), and a number of reference signals or symbols (RS) used for different purposes. A gNodeB (or gNB or base station) transmits data and control information (DCI) through the so-called physical downlink shared channel (PDSCH) and physical downlink control channel (PDCCH) or enhanced PDCCH (ePDCCH), respectively. Moreover, the downlink signal(s) of the gNB may contain one or multiple types of RSs including a common RS (CRS) in LTE, a channel state information RS (CSI-RS), a demodulation RS (DM-RS), and a phase tracking RS (PT-RS). The CRS is transmitted over a DL system bandwidth part and used at the user equipment (UE) to obtain a channel estimate to demodulate the data or control information. The CSI-RS is transmitted with a reduced density in the time and frequency domain compared to CRS and used at the UE for channel estimation/ channel state information (CSI) acquisition. The DM-RS is transmitted only in a bandwidth part of the respective PDSCH and used by the UE for data demodulation. For signal precoding at the gNB, several CSI-RS reporting mechanisms are used such as non-precoded CSI-RS and beamformed CSI-RS reporting (see reference [1]). For a non-precoded CSI-RS, a one-to-one mapping between a CSI-RS port and a transceiver unit, TXRU, of the antenna array at the gNB is utilized. Therefore, non-precoded CSI-RS provides a cell-wide coverage where the different CSI-RS ports have the same beam-direction and beam-width. For beamformed/precoded UE-specific or non-UE-specific CSI-RS, a beam-forming operation is applied over a single- or multiple antenna ports to have several narrow beams with high gain in different directions and therefore, no cell-wide coverage.

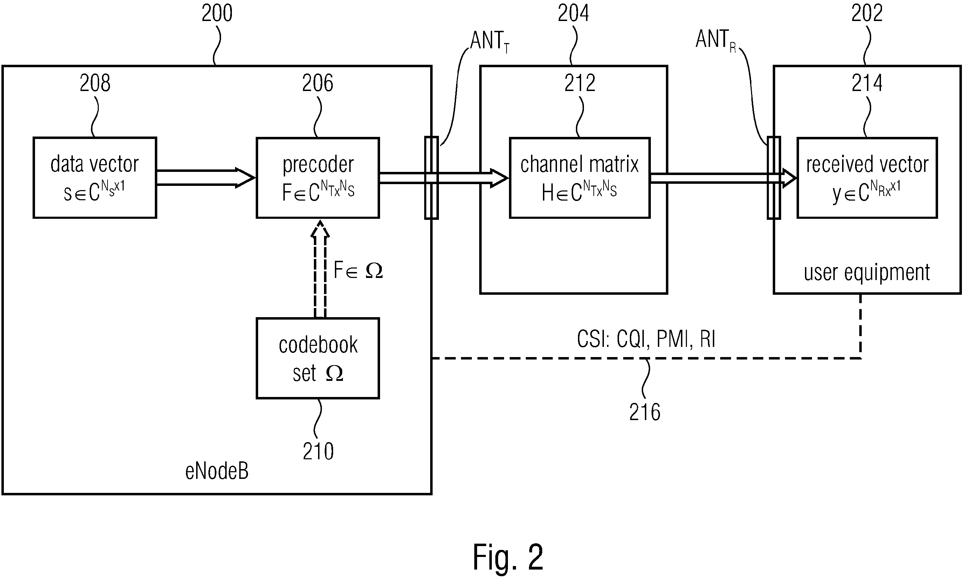

In a wireless communication system employing time division duplexing, TDD, due to channel reciprocity, the channel state information (CSI) is available at the base station (gNB). However, when employing frequency division duplexing, FDD, due to the absence of channel reciprocity, the channel is estimated at the UE and the estimate is fed back to the gNB. Fig. 2 shows a block-based model of a MIMO DL transmission using codebook-based-precoding in accordance with LTE release 8. Fig. 2 shows schematically the base station 200, gNB, the user equipment, UE, 202 and the channel 204, like a radio channel for a wireless data communication between the base station 200 and the user equipment 202. The base station includes an antenna array $ANT_T$ having a plurality of antennas or antenna elements, and a precoder 206 receiving a data vector 208 and a precoder matrix F from a codebook 210. The channel 204 may be described by the channel tensor/matrix 212. The user equipment 202 receives the data vector 214 via an antenna or an antenna array $ANT_R$ having a plurality of antennas or antenna elements. A feedback channel 216 between the user equipment 202 and the base station 200 is provided for transmitting feedback information. The previous releases of 3GPP up to Rel.15 support the use of several downlink reference symbols (such as CSI-RS) for CSI estimation at the UE.

In FDD systems (up to Rel. 15), the estimated channel at the UE is reported to the gNB implicitly where the CSI report transmitted by the UE over the feedback channel includes the rank index (RI), the precoding matrix index (PMI) and the channel quality index (CQI) (and the CRI from Rel. 13) allowing, at the gNB, deciding the precoding matrix, and the modulation order and coding scheme (MCS) of the symbols to be transmitted. The PMI and the RI are used to determine the precoding matrix from a predefined set of matrices $\Omega$ called 'codebook'. The codebook, e.g., in accordance with LTE, may be a look-up table with matrices in each entry of the table, and the PMI and RI from the UE decide from which row and column of the table the precoder matrix to be used is obtained. The precoders and codebooks are designed up to Rel. 15 for gNBs equipped with one-dimensional Uniform Linear Arrays (ULAs) having $N_1$ dual-polarized antennas (in total $N_t = 2N_1$ antennas), or with two-dimensional Uniform Planar Arrays (UPAs) having dual-polarized antennas at $N_1 N_2$ positions (in total $N_t = 2N_1 N_2$ antennas). The ULA allows controlling the radio wave in the horizontal (azimuth) direction only, so that azimuth-only beamforming at the gNB is possible, whereas the UPA supports transmit beamforming on both vertical (elevation) and horizontal (azimuth) directions, which is also referred to as full-dimension (FD) MIMO. The codebook, e.g., in the case of massive antenna arrays such as FD-MIMO, may be a set of beamforming weights that forms spatially separated electromagnetic transmit/receive beams using the array response vectors of the array. The beamforming weights (also referred to as the 'array steering vectors') of the array are amplitude gains and phase adjustments that are applied to the signal fed to the antennas (or the signal received from the antennas) to transmit (or obtain) a radiation towards (or from) a particular direction. The components of the precoder matrix are obtained from the codebook, and the PMI and the RI are used to 'read' the codebook and obtain the precoder. The array steering vectors may be described by the columns of a 2D Discrete Fourier Transform (DFT) matrix when ULAs or UPAs are used for signal transmission.

The precoder matrices used in the Type-I and Type-II CSI reporting schemes in 3GPP New Radio Rel. 15 are defined in the frequency-domain and have a dual-stage structure: $F(s) = F_1 F_2(s),\ s = 0...,S - 1$ (see reference [2]), where

$S$ denotes the number of subbands. The matrix $\boldsymbol{F}_1$ is a wide-band matrix, independent on index s, and contains $U$ spatial beamforming vectors (the so-called spatial beams) $\mathbf{b}_u \in \mathbb{C}^{N_1 N_2 \times 1}$, $u = 1,...,U$ selected out of a DFT-codebook matrix,

$$F_1 = \begin{bmatrix} b_{1,...,}b_U & 0 & \cdots & 0 \\ 0 & \cdots & 0 & b_{1,...,}b_U \end{bmatrix} \in \mathbb{C}^{2N_1 N_2 \times 2U}.$$

The matrix $\boldsymbol{F}_2(s)$, is a selection/combining/co-phasing matrix that selects/combines/co-phases the beams defined in $F_1$ for the $s$-th configured sub-band.

For example, for a rank-1 transmission and Type-I CSI reporting, $\boldsymbol{F}_2(s)$ is given for a dual-polarized antenna array by (see reference [2])

$$F_2(s) = \begin{bmatrix} e_u \\ e^{j\delta_1}e_u \end{bmatrix} \in \mathbb{C}^{2U \times 1},$$

where $e_u \in \mathbb{C}^{U \times 1}$, $u = 1,2,\cdots,U$ contains zeros at all positions, except the $u$-th position which is one. Such a definition of $e_u$ selects the $u$-th vector for each polarization of the antenna array, and combines them across both polarizations. Furthermore, $\delta_1$ is a quantized phase adjustment for the second polarization of the antenna array.

For example, for a rank-1 transmission and Type-II CSI reporting, $\boldsymbol{F}_2(s)$ is given for dual-polarized antenna arrays by (see reference [2])

$$F_2(s) = \begin{bmatrix} e^{j\delta_1}p_1 \\ \vdots \\ e^{j\delta_{2U}}p_{2U} \end{bmatrix} \in \mathbb{C}^{U \cdot 2 \times 1}$$

where $p_u$ and $\delta_u, u=1,2,...,2U$ are quantized amplitude and phase beam-combining coefficients, respectively.

For rank-R transmission, $\boldsymbol{F}_2(s)$ contains $R$ vectors, where the entries of each vector are chosen to combine single or multiple beams within each polarization and/or combining them across both polarizations.

The selection of the matrices $\boldsymbol{F}_1$ and $\boldsymbol{F}_2(s)$ is performed by the UE based on the knowledge of the current channel conditions. The selected matrices are contained in the CSI report in the form of a RI and a PMI and used at the gNB to update the multi-user precoder for the next transmission time interval.

An inherent drawback of the current CSI reporting formats described in reference [2] for the implicit feedback scheme is that the RI and PMI only contain information of the current channel conditions. Consequently, the CSI reporting rate is related to the channel coherence time which defines the time duration over which the channel is considered to be not varying. This means, in quasi-static channel scenarios, where the UE does not move or moves slowly, the channel coherence time is large and the CSI needs to be less frequently updated. However, if the channel conditions change fast, for example due to a high or fast movement of the UE in a multi-path channel environment, the channel coherence time is short and the transmit signals experience severe fading caused by a Doppler-frequency spread. For such channel conditions, the CSI needs to be updated frequently which causes a high feedback overhead. Especially, for future NR systems (Rel. 16) that are likely to be more multi-user centric, the multiple CSI reports from users in highly-dynamic channel scenarios will drastically reduce the overall efficiency of the communication system.

To overcome this problem, several explicit CSI feedback schemes have been proposed that take into account the channel-evolution over time (see reference [3]). Here, explicit CSI refers to reporting of explicit channel coefficients from the UE to the gNB without a codebook for the precoder selection at the UE. Those schemes have in common estimating the parameters of the dominant channel taps of the multipath propagation channel as well as their time-evolution at the UE. For example, in reference [3] each channel tap is modelled as a sum of sub-channel taps where each sub-tap is parameterized with a Doppler-frequency shift and path gain. The estimated parameters for each channel tap are fed back to the base station, where they are used with a channel model for time-domain based channel prediction before downlink precoding. The availability of explicit CSI comes at an increased overhead for the feedback channel compared to implicit-based channel feedback, especially for slow-varying channels, which is not desired.

For example, WO 2018/052255 A1 relates to explicit CSI acquisition to represent the channel in wireless communication systems using the principle component analysis (PCA), which is applied on the frequency-domain channel matrix, covariance matrix, or eigenvector of the channel matrix. Thus, a codebook approach for downlink signal precoding at the base station equipped with a two-dimensional array and CSI reporting configuration is proposed. However, an inherent drawback of the proposed CSI reporting scheme is that the CSI report from a user contains only information about the selected CQI, PMI and RI with respect to the current MIMO channel state/realization and does not take into account channel variations over time caused by small-scale channel fading. Therefore, when users experience fast-fading channel conditions, a frequent CSI update is needed which causes a high feedback overhead over time. Moreover, the proposed CSI reporting scheme is restricted to one beam per layer PMI feedback which leads to a limited CSI accuracy and turns out to be insufficient for CSI acquisition in multi-user MIMO.

Moreover, to track channel-evolution overtime, the reference signal need be spread over time. In the current 3GPP NR specification (see reference [1]), a single shot CSI-RS is configured at a particular time slot. Such slots of CSI-RS are periodically transmitted, or triggered on demand. The configuration of a CSI-RS resource set(s) which may refer to NZP-CSI-RS, CSI-IM or CSI-SSB resource set(s) (see reference [2]) is performed using the following higher layer parameters (see reference [4]):

- *CSI-ResourceConfig* - The resource set(s) configuration consists of the IDs of the resources configured in the resource set(s), the type of each CSI-RS resource in terms of its periodicity, and the bandwidth part they are configured in.
- *CSI-ResourcePeriodicityAndOffset* - Mentions the periodicity of a CSI-RS resource in terms of number of slots and offset of CSI-RS.
- *CSI-RS-ResourceMapping* - Mentions the resource elements in the time-frequency map the CSI-RS resource is mapped to, number of CSI-RS ports, the CDM type used for the mapped reference symbols, and the density and bandwidth of occupancy of the reference symbols in the frequency domain.

  ○ frequencyDomainAllocation
  ○ nrofPorts
  ○ firstOFDMSymbolInTimeDomain
  ○ firstOFDMSymbolInTimeDomain2
  ○ cdm-Type
  ○ density
  ○ freqBand

While the CSI-RS design may be used to acquire CSI for a link adaptation (modulation and coding scheme - MCS), and for selecting a precoding matrix from a specific channel realization/snapshot, it may not track channel evolution in time to estimate Doppler-frequency components of a MIMO channel.

It is noted that the information in the above section is only for enhancing the understanding of the background of the invention and therefore it may contain information does not form prior art that is already known to a person of ordinary skill in the art.

It is an object of the present invention to provide an improved approach for CSI reporting allowing to track the channel time-evolution.

This object is achieved by the subject matter as defined in the independent claims.

Embodiments are defined in the dependent claims.

Embodiments of the present invention are now described in further detail with reference to the accompanying drawings, in which:

Fig. 1      shows a schematic representation of an example of a wireless communication system;

Fig. 2      shows a block-based model of a MIMO DL transmission using codebook-based-precoding in accordance with LTE release 8;

Fig. 3      is a schematic representation of a wireless communication system for communicating information between a transmitter, which may operate in accordance with the inventive teachings described herein, and a plurality of receivers, which may operate in accordance with the inventive teachings described herein;

Fig. 4      is a flow diagram illustrating the configuration of CSI parameters, the CSI measurement, the composite precoder matrix calculation and the CSI reporting;

Fig. 5(a)   illustrates a CSI-RS with a periodicity of 10 slots and no repetition (CSI-RS-BurstDuration not configured or CSI-RS-BurstDuration = 0);

Fig. 5(b)    illustrates a CSI-RS with a periodicity of 10 slots and repetition of 4 slots (CSI-RS-BurstDuration = 4);

Fig. 6    illustrates a CSI-RS-BurstDuration information element;

Fig. 7    illustrates a frequency-domain channel tensor (three-dimensional array) $\mathcal{H}$ of dimension $N \times S \times T$;

Fig. 8    illustrates an example of a bitmap for the selection of delay vectors per beam and Doppler vectors per delay and per beam (see Fig. 8(a)) and corresponding feedback information (see Fig. 8(b));

Fig. 9    illustrates an example of the PMI feedback for a rank-1 transmission assuming three codebooks for the precoder matrix;

Fig. 10    illustrates a codebook based construction of the *l-th* layer precoder at the gNB and the association of the *l-th* layer precoder with the antenna ports (AP) for an example configuration $N_1 = 4$, $N_2 = 2$, $P = 2$;

Fig. 11    illustrates a composite Doppler-delay-beam precoder matrix of size $N_t \cdot T \times S$; and

Fig. 12    illustrates an example of a computer system on which units or modules as well as the steps of the methods described in accordance with the inventive approach may execute.

In the following, preferred embodiments of the present invention are described in further detail with reference to the enclosed drawings in which elements having the same or similar function are referenced by the same reference signs.

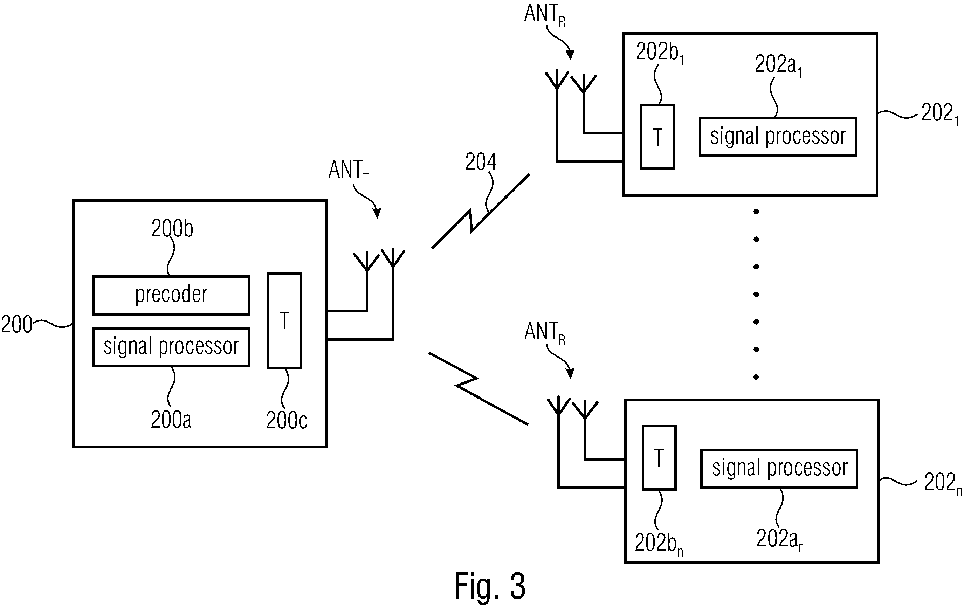

Embodiments of the present invention may be implemented in a wireless communication system or network as depicted in Fig. 1 or Fig. 2 including transmitters or transceivers, like base stations, and communication devices (receivers) or users, like mobile or stationary terminals or IoT devices, as mentioned above. Fig. 3 is a schematic representation of a wireless communication system for communicating information between a transmitter 200, like a base station, and a plurality of communication devices $202_1$ to $202_n$, like UEs, which are served by the base station 200. The base station 200 and the UEs 202 may communicate via a wireless communication link or channel 204, like a radio link. The base station 200 includes one or more antennas $ANT_T$ or an antenna array having a plurality of antenna elements, and a signal processor 200a. The UEs 202 include one or more antennas $ANT_R$ or an antenna array having a plurality of antennas, a signal processor $202a_1$, $202a_n$, and a transceiver $202b_1$, $202b_n$. The base station 200 and the respective UEs 202 may operate in accordance with the inventive teachings described herein.

**COMMUNICATION DEVICE**

The present invention provides (see for example claim 1) a communication device for providing channel state information, CSI, feedback in a wireless communication system, wherein
the communication device is to receive from a transmitter a radio signal via a time-variant, frequency-selective channel, the radio signal including reference signals according to a reference signal configuration comprising one or more ports, and signals comprising the reference signal configuration;
the communication device is to estimate the channel using measurements on the reference signals on the radio channel, the reference signals provided over a configured number of frequency and time domain resources,
the communication device is to

• select a precoder matrix (**W**),
• calculate either one or more of a channel quality indicator, CQI, and/or a precoder matrix indicator, PMI, and/or a rank indicator, RI, using the explicit CSI and the precoder matrix (**W**), and
• report to the transmitter the CSI feedback including either one or more of the CQI, and/or the PMI and/or the RI, wherein the PMI and RI are used to indicate the precoder matrix for the configured frequency resources, time domain resources and one or more ports, and

wherein the precoder matrix includes

• a single codebook comprising one or more Doppler-frequency components of the precoder, or
• two codebooks, a first codebook and a second codebook, wherein the first codebook comprises one or more Doppler-frequency components of the precoder, and wherein the second codebook comprises one or more delay components of the precoder or one or more spatial beam components of the precoder, or

- three codebooks, a first codebook, a second codebook and a third codebook, wherein the first codebook comprises one or more Doppler-frequency components of the precoder, wherein the second codebook comprises one or more delay components of the precoder, and wherein the third codebook comprises one or more spatial beam components of the precoder.

In accordance with embodiments of the present invention (see for example claim 2), in case the precoder matrix includes two codebooks, the second codebook comprises one or more spatial beam components of the precoder.

In accordance with embodiments of the present invention (see for example claim 3), in case the precoder matrix includes two codebooks, the second codebook comprises one or more one or more delay components of the precoder.

In accordance with embodiments of the present invention (see for example claim 4), the communication device is configured to

- report a single CQI value for a configured number of subbands using the selected precoder matrix $W^{(r)}$ for the configured time and frequency domain resources, or
- report a CQI value per subband, e.g., per CQI subband, using the selected precoder matrix $W^{(r)}$ for the configured time and frequency domain resources.

In accordance with embodiments of the present invention (see for example claim 5), the communication device is to

- select per transmission layer or for a subset of transmission layers, a subset of Doppler-frequency components vectors from a Doppler-frequency codebook, and
- indicate the selected Doppler-frequency vectors from the Doppler-frequency codebook in the CSI report by a Doppler-frequency basis subset indicator per transmission layer or for a subset of transmission layers.

In accordance with embodiments of the present invention (see for example claim 6),

- the Doppler-frequency basis subset indicator is given by a bitmap, where each bit in the bitmap is associated with a Doppler-frequency vector from the Doppler-frequency codebook, or
- the Doppler-frequency basis subset indicator is given by a $\left\lceil \log_2 \binom{N_4}{F} \right\rceil$ bit indicator, where $N_4$ denotes the number of vectors in the Doppler-frequency codebook, and $F$ denotes the number of selected Doppler-frequency components.

In accordance with embodiments of the present invention (see for example claim 7), the precoder matrix includes the Doppler-frequency codebook and a delay codebook, the Doppler-frequency basis subset indicator per layer is identical for all delays of the layer, and

the communication device is to indicate the selected Doppler-frequencies components per delay from the Doppler-frequency basis subset indicator by a sub-Doppler-frequency basis subset indicator.

In accordance with embodiments of the present invention (see for example claim 8),

- the sub-Doppler-frequency basis subset indicator is represented by a bitmap, where each bit in the bitmap is associated with a Doppler-frequency vector of the Doppler-frequency basis subset indicator, or
- wherein the sub-Doppler-frequency basis subset indicator is represented by a $\left\lceil \log_2 \binom{A}{B} \right\rceil$ bit indicator, where $A$ denotes the number of selected Doppler-frequency components of the Doppler-frequency basis subset indicator, and $B$ denotes the number of selected Doppler-frequency components of the sub-Doppler-frequency basis subset indicator, and wherein the communication device is to indicate the selected Doppler-frequency components $B$ in the CSI report.

In accordance with embodiments of the present invention (see for example claim 9), the sub-Doppler-frequency basis subset indicator for a subset or all delays is identical, and the communication device is to report only a single sub-Doppler-frequency basis subset indicator per delay and per polarization.

In accordance with embodiments of the present invention (see for example claim 10), the precoder matrix includes a Doppler-frequency codebook and a delay codebook, and the communication device is to

- select per transmission layer or for a subset of transmission layers, a subset of delay vectors from the delay codebook, and
- indicate the selected delay vectors from the delay codebook in the CSI report by a delay basis subset indicator per transmission layer or for a subset of transmission layers.

In accordance with embodiments of the present invention (see for example claim 11),

- the delay basis subset indicator for each layer is given by a bitmap, where each bit in the bitmap is associated with a delay vector from the delay codebook, or
- the delay basis subset indicator is given by a $\left\lceil \log_2 \binom{N_3}{D} \right\rceil$ bit indicator, where $N_3$ denotes the number of vectors in the delay codebook, and D denotes the number of delay.

In accordance with embodiments of the present invention (see for example claim 12), the precoder matrix includes a Doppler-frequency codebook and a beam codebook, and the communication device is to

- select per transmission layer or for a subset or for all transmission layers, a subset of beam vectors from the beam codebook, and
- indicate the selected beam vectors from the beam codebook in the CSI report by a beam basis subset indicator per transmission layer or for the subset of transmission layers or for all transmission layers.

In accordance with embodiments of the present invention (see for example claim 13),

- the beam basis subset indicator is given by a bitmap, where each bit in the bitmap is associated with a beam vector from the beam codebook, or
- the beam basis subset indicator is given by a $\left\lceil \log_2 \binom{N_t}{L} \right\rceil$ bit indicator, where $N_t$ denotes the number of vectors in the beam codebook, and $L$ denotes the number of beam components.

In accordance with embodiments of the present invention (see for example claim 14), the communication device is to

- select $K^{(r)}$ or less than $K^{(r)}$ non-zero combining coefficients for the r-th layer of the precoder matrix, or
- select $K$ or less than $K$ non-zero combining coefficients for all layers of the precoder matrix,
- report the selected non-zero combining coefficients for all layers of the precoder matrix, and
- indicate the selected coefficients in the CSI report.

In accordance with embodiments of the present invention (see for example claim 15), the selected non-zero coefficients for the r-th layer are indicated by a bitmap, and wherein each bit in the bitmap is associated with a selected Doppler-frequency component from the Doppler-frequency subset basis indicator, with a selected delay component from the delay subset basis indicator, if a delay codebook is configured, and with a selected beam component from the beam subset basis indicator, if a beam codebook is configured.

In accordance with embodiments of the present invention (see for example claim 16), the selected non-zero coefficients for the r-th layer are indicated by a $\left\lceil \log_2 \binom{A}{B} \right\rceil$ bit indicator, where $A$ denotes a combination of the product of the selected number of Doppler-frequency components from the Doppler-frequency subset basis indicator, the selected number of delay components from the delay subset basis indicator, if a delay codebook is configured, and the selected number of beam components from the beam subset basis indicator, if a beam codebook is configured, and $B$ denotes the number of selected non-zero coefficients of the r-th layer.

In accordance with embodiments of the present invention (see for example claim 17), the communication device is configured, e.g., by a base station or another network entity, with the parameter $K^{(r)}$, or $K$ representing the maximum number of non-zero coefficients to be reported for the r-th layer, or representing the maximum number of non-zero coefficients to be reported for all layers of the CSI matrix, wherein the communication device may be configured with different or identical $K^{(r)}$ per layer or per layer-group or per subset of layers.

In accordance with embodiments of the present invention (see for example claim 18), the communication device is to select the precoder matrix indicator, PMI, for reporting, and the CSI report includes two parts, wherein a first part has a fixed size and indicates the size of the payload of the second part, wherein the two CSI parts may be independently encoded.

In accordance with embodiments of the present invention (see for example claim 19), the second CSI part has a varying payload size and may contain at least one or more of the basis subset indicators for the different codebooks, the information on the transmission rank, and quantized combining coefficients for all layers.

In accordance with embodiments of the present invention (see for example claim 20), the communication device and/or the transmitter comprises one or more of a mobile terminal, or stationary terminal, or cellular IoT-UE, or an IoT device, or a ground based vehicle, or an aerial vehicle, or a drone, or a moving base station, or road side unit, or a building, or a macro cell base station, or a small cell base station, or a road side unit, or a UE, or a remote radio head, or an AMF, or an SMF, or a core network entity, or a network slice as in the NR or 5G core context, or any transmission/reception point (TRP) enabling an item or a device to communicate using the wireless communication network, the item or device being provided with network connectivity to communicate using the wireless communication network.

**SYSTEM**

The present invention provides (see for example claim 12) a wireless communication network, comprising one or more of the inventive communication devices.

**METHOD**

The present invention provides (see for example claim 22) a method for providing channel state information, CSI, feedback in a wireless communication system, the method comprising:

receiving, by a communication device of the wireless communication system, from a transmitter a radio signal via a time-variant, frequency-selective channel, the radio signal including reference signals according to a reference signal configuration comprising one or more ports, and signals comprising the reference signal configuration,

estimating, by the communication device, the channel using measurements on the reference signals on the radio channel, the reference signals provided over a configured number of frequency and time domain resources,

selecting, by the communication device, a precoder matrix ($W$),

calculating, by the communication device, either one or more of a channel quality indicator, CQI, and/or a precoder matrix indicator, PMI, and/or a rank indicator, RI, using the explicit CSI and the precoder matrix ($W$), and

reporting, by the communication device, to the transmitter the CSI feedback including either one or more of the CQI, and/or the PMI and/or the RI, wherein the PMI and RI are used to indicate the precoder matrix for the configured frequency resources, time domain resources and one or more ports, and

wherein the precoder matrix includes

- a single codebook comprising one or more Doppler-frequency components of the precoder, or
- two codebooks, a first codebook and a second codebook, wherein the first codebook comprises one or more Doppler-frequency components of the precoder, and wherein the second codebook comprises one or more delay components of the precoder or one or more spatial beam components of the precoder, or
- three codebooks, a first codebook, a second codebook and a third codebook, wherein the first codebook comprises one or more Doppler-frequency components of the precoder, wherein the second codebook comprises one or more delay components of the precoder, and wherein the third codebook comprises one or more spatial beam components of the precoder.

**COMPUTER PROGRAM PRODUCT**

The present invention provides a computer program product comprising instructions which, when the program is executed by a computer, causes the computer to carry out one or more methods in accordance with the present invention.

Thus, embodiments of the present invention provide improvements for CSI reporting allowing to track the channel time-evolution. More specifically, embodiments of the present invention provide an extension of the existing CSI-RS to track the channel time-evolution, e.g., for a channel with fast varying channel conditions, for example due to a high or fast movement of the UE in a multi-path channel environment, and having a short channel coherence time.

The present invention is advantageous as by tracking the channel time-evolution, even for channels with varying channel conditions, the CSI needs to be updated less frequently, e.g., with a rate similar for channels with a long channel coherence time, thereby reducing or avoiding a feedback overhead. For example, the large-scale channel parameters such as path loss and shadow fading may not change quickly over time, even in a channel having a short channel coherence time, so that the channel variations are mainly related to small scale channel fading. This means the MIMO channel parameters of the impulse response such as path components and channel delays do not change over a longer time period, and channel variations caused by movement of the UE lead only to phase fluctuations of the MIMO channel path components.

This means the components from the codebook(s) as well as the precoder combining coefficients of the precoder matrix of embodiments of the present invention remain identical or substantially identical for a longer time period, and need to be less frequently updated. A CSI-RS design may be used allowing to track time-evolution of CSI or a new implicit CSI reporting scheme that takes into account the channel time-evolution and provides information about current and future RI, PMI and CQI in a compressed form to reduce the feedback rate.

Embodiments of the present invention provide a communication device for providing a channel state information, CSI, feedback in a wireless communication system, like a wireless communication system described above with reference to Fig. 1 to Fig. 3. The communication device may include a transceiver, like the transceiver 200c or 202b in Fig. 3, to receive, from a transmitter a radio signal via a time-variant, frequency-selective channel. The radio signal may include reference signals according to a reference signal configuration comprising one or more antenna port(s), and signals comprising the reference signal configuration. The communication device may include a controller, e.g., implemented by the signal processor 200a or 202a in Fig. 3. The controller or processor estimates the channel using measurements on the reference signals on the radio channel, the reference signals provided over a configured number of frequency and time domain resources, selects a precoder matrix (**W**) based on one or more codebooks, including one or more Doppler-frequency components of the precoder, and, optionally, one or more transmit-side spatial beam components of the precoder, and/or one or more delay components of the precoder, and calculates either one or more of a channel quality indicator, CQI, and/or a precoder matrix indicator, PMI, and/or a rank indicator, RI, using the explicit CSI and the precoder matrix (**W**), and reports to the transmitter the CSI feedback including either one or more of the CQI, and/or the PMI and/or the RI, wherein the PMI and RI are used to indicate the precoder matrix for the configured frequency resources, time domain resources and antenna port(s).

In the following embodiments for the precoder matrix (**W**) and codebook configurations are described in more detail.

## Single-codebook based CSI reporting

### 1. Doppler-based CSI reporting

In accordance with embodiments, the communication device is configured with a CSI report configuration for a single antenna port. The precoder matrix (**W**) that is comprised in the PMI report is based on a single codebook and comprises one or more Doppler-frequency components. The precoder performs precoding in the time/Doppler domain on a set of configured frequency and time resources. The precoder matrix may be represented for a configured number of frequency-domain subbands $N_3$ and a configured number of time-domain resources $N_4$ by a dual-stage precoder $W(s) = W_1(s)W_2(s)$, where $W(s)$ is the precoder matrix for the $s$-th frequency-domain subband ($s = 0, ..., N_3 - 1$) of size $1 \times N_4$, $W_1(s)$ contains the complex combining coefficients for the $F_s$ Doppler-frequency components for the $s$-th subband, and $W_2(s)$ contains the indicated $F_s$ Doppler-frequency components selected from the codebook for the $s$-th subband. The parameter $N_4$ denotes the size of each Doppler-frequency vector and is related to the configured number of time-domain resources. The precoder matrix $W(s)$ may also represented by

$$W(s) = P \sum_{f=0}^{F_s-1} \gamma_f(s) f_{s,f}^H$$

$$(1)$$

where

- $F_s$ is the number of Doppler-frequency components for the $s$-th subband,

- $\gamma_f(s)$ is the combining coefficient associated with the $s$-th subband and $f$-th Doppler-frequency component of the precoder,

- $f_{s,f}^H \in C^{1 \times N_4}$ is the $f$-th Doppler-frequency component for the s-th subband, and

- P is a scalar normalization factor to ensure a certain total transmission power.

The parameter $N_4$ may depend on the number of configured time-domain resources $(N_{st})$, where $N_{st}$ may be given by a number of OFDM symbols. As an example, the size of each Doppler-frequency vector is identical to the number of configured time-domain resources, $N_4 = N_{st}$. In another example, $N_4$ is a multiple of $N_{st}$, $N_4 = \beta N_{st}$, where $\beta > 1$ or $\beta < 1$. The parameter $\beta$ may be a priori known at the communication device, or configured via higher layer (e.g., RRC) by the base station or any other network entity.

The signaling overhead for the above Doppler-based precoding and CSI reporting scheme is independent of the configured number of time domain resources, and does not depend on the fast-fading channel variations of the radio channel. Hence, for a wireless communication the feedback overhead for the PMI reporting (matrices $W_1$ and $W_2$) of the above precoder over a longer time period is much lower than that of the subband-based precoder described above.

The Doppler codebook-based CSI reporting scheme is, for example, beneficial for a wireless communication at mm-Wave (frequency range 2), where due to the linear dependency of the Doppler frequency on the carrier frequency, a main challenge of a communication is to deal with the channel impairments caused by the high Doppler spread in mobility scenarios compared to sub-6 GHz (frequency range 1) communications. At mm-Wave, even small movements of the UE traverse to several wavelengths, implying significant time-variations and potential deep fades of the channel. For the subband-based precoding and CSI reporting scheme described above, the network has to trigger more frequently CSI measurements to accurately track the channel. Obviously, the high CSI update rate comes at the cost of higher receiver battery consumption and increased use of resources for channel measurements/tracking and CSI reporting. Moreover, when the update rate of the PMI measurements is not sufficiently small with respect to the channel variation rate, a large performance loss is observed. In summary, the Doppler codebook-based CSI reporting scheme has the following advantages over the 3GPP Release 15 subband-based precoding and CSI reporting:

- less resources are required for CSI measurements,
- less resources are required for CSI reporting,
- the receiver complexity and receiver battery consumption is reduced, because of less CSI calculation and reporting, and
- performance improvements if channel variations are fast.

**Two-codebook based CSI reporting**

1. Beam-Doppler-based MIMO precoding

In accordance with embodiments, the communication device is configured with a CSI report configuration for one or more antenna port(s). The precoder matrix ($W$) that is comprised in the PMI report is applied on a single port or on multiple port(s) and is based on a first codebook for one or more spatial beam or port selection components and a second codebook for one or more Doppler-frequency components of the precoder. The precoder performs precoding in the time/Doppler and space domains for a number of layers over a set of configured frequency resources, time domain resources and port(s). The precoder matrix may be represented for a configured number of frequency-domain subbands $N_3$, a configured number of time-domain resources $N_4$, and a configured number of ports by a three-stage precoder $W(s) = W_1 W_2(s) W_3$, where $W$ is of size $\overline{N}_t \times N_4$, $W_1$ contains $L$ spatial beams/port-selection components of the precoder, $W_2(s)$ contains the complex combining coefficients for the $L$ spatial beams, $F_i$ Doppler-frequency components per spatial beam and $s$-th ($s = 0, ..., N_3 - 1$) subband, and $W_3$ contains the indicated $F_i$ Doppler-frequency vectors for each spatial beam. For a dual-polarized antenna port layout, the precoder matrix $W$ may be represented for the $r$-th transmission layer by

$$W^{(r,p)} = P \sum_{i=0}^{L_r - 1} \sum_{v=0}^{F_{r,i} - 1} \gamma_{r,p,i,v}(s) b_{r,p,i} f_{r,p,i,v}^H,$$

(2)

where

- $L_r$ is the number of spatial beam/port-selection vectors of the *r*-th transmission layer,
- $F_{r,i}$ is the number of Doppler-frequency components for the *i*-th beam vector of the r-th transmission layer,
- $\gamma_{r,p,i,v}(s)$ is the combining coefficient associated with the *p*-th polarization (p=1,2), v-th Doppler-frequency component and *i*-th spatial beam of the *r*-th transmission layer,
- $b_{r,p,i} \in C^{\bar{N}_t \times 1}$ is the *i*-th beam/port-selection vector associated with the *p*-th polarization of the r-th transmission layer,
- $f_{r,p,i,v} \in C^{N_4 \times 1}$ is the *v*-th Doppler-frequency vector associated with the *p*-th polarization and with the *i*-th spatial beam of the *r*-th transmission layer, and
- $P$ is a scalar normalization factor to ensure a certain total transmission power.

Note that for an arbitrary antenna layout, $W^{(r,p)} = W^{(r)}$, and $\bar{N}_t = N_t$, otherwise for a dual-polarized layout $\bar{N}_t = N_t/2$, where $N_t/2$ denotes the number of ports per polarization. The parameter $N_4$ denotes the size of the Doppler-frequency vectors and is associated with the configured time-domain resources of the precoder.

The parameter $N_4$ may depend on the number of configured time-domain resources $(N_{st})$, where $N_{st}$ may be given by a number of OFDM symbols. As an example, the size of each Doppler-frequency vector is identical to the number of configured time-domain resources, $N_4 = N_{st}$. In another example, $N_4$ is a multiple of $N_{st}$, $N_4 = \beta N_{st}$, where $\beta > 1$ or $\beta < 1$. The parameter $\beta$ may be a priori known at the communication device, or configured via higher layer (e.g., RRC) by the base station or any other network entity.

Note that similar to the above described Doppler-based precoding and CSI reporting scheme, the signaling overhead for the Beam-Doppler precoding and CSI reporting is independent of the configured number of time domain resources, and does not depend on the fast-fading channel variations of the radio channel. Hence, for a wireless communication the feedback overhead for the PMI reporting (matrices $W_1$, $W_2$, and $W_3$) of the above precoder over a longer time period is much lower than that of the subband-based precoder described above.

The Beam-Doppler codebook-based CSI reporting scheme is, for example, beneficial for a wireless communication at mm-Wave (frequency range 2), where even after beam alignment between the transmitter and the receiver, the channel Doppler spread may be large due to the presence of several multipath components in the channel arising from different angles. In order to cope with the Doppler spread and the corresponding strong channel variations at the higher frequencies, for a subband-based precoding and CSI reporting scheme described above, the network has to trigger more frequently CSI measurements to accurately track the channel. Obviously, the high CSI update rate comes at the cost of higher receiver battery consumption and increased use of resources for channel measurements/tracking and CSI reporting. Moreover, when the update rate of the PMI measurements is not sufficiently small with respect to the channel variation rate, a large performance loss is observed. In summary, the Beam-Doppler codebook-based CSI reporting scheme has the following advantages over the 3GPP Release 15 subband-based precoding and CSI reporting:

- less resources are required for CSI measurements,
- less resources are required for CSI reporting,
- the receiver complexity and receiver battery consumption is reduced, because of less CSI calculation and reporting, and
- performance improvements if channel variations are fast.

2. Doppler-delay-based precoding

In accordance with embodiments, the communication device is configured with a CSI report configuration for a single port. The precoder matrix ($W$) is applied on a single port and is based on a first codebook for one or more delay components, and a second codebook for one or more Doppler-frequency components of the precoder. The precoder performs precoding in the time/Doppler and delay domains for a number of layers over a set of configured frequency resources and time domain resources. The precoder matrix may be represented for a configured number of frequency-domain subbands $N_3$, a configured number of time-domain resources $N_4$ by a three-stage precoder $W = W_1 W_2 W_3$, where $W$ is of size $N_3 x N_4$, $W_1$ contains $D$ delays of the precoder, $W_2$ contains the complex combining coefficients for the $F_{r,d}$ Doppler-frequency components per delay and layer, and $W_3$ contains the indicated $F_{r,d}$ Doppler-frequency vectors per delay. The precoder matrix $W$ may be represented for the r-th transmission layer by

$$W^{(r)} = P \sum_{d=0}^{D_r-1} \sum_{v=0}^{F_{r,d}-1} \gamma_{r,d,v} d_{r,d}^* f_{r,d,v}^H,$$

(3)

where

- $D_r$ is the number of delay vectors of the $r$-th transmission layer,
- $F_{r,d}$ is the number of Doppler-frequency components for the $d$-th delay vector of the $r$-th transmission layer,
- $\gamma_{r,d,v}$ is the combining coefficient associated with the $v$-th Doppler-frequency component and $d$-th delay of the $r$-th transmission layer,
- $d_{r,d} \in C^{N_3 \times 1}$ is the $d$-th delay vector associated with the $r$-th transmission layer,
- $f_{r,d,v} \in C^{N_4 \times 1}$ is the $v$-th Doppler-frequency vector associated with the $d$-th delay of the $r$-th transmission layer, and
- $P$ is a scalar normalization factor to ensure a certain total transmission power.

The parameter $N_4$ denotes the size of each Doppler-frequency vector and is associated with the configured time-domain resources of the precoder. Similar, the parameter $N_3$ denotes the size of the delay vectors and is associated with the configured frequency subband size of the precoder.

The signaling overhead for the above Doppler-delay-codebook-based precoding scheme is independent on the number of subbands, and hence decoupled from the system bandwidth. As such, the feedback overhead for the precoding matrix indication does not depend on the system bandwidth/number of subbands. The Doppler-delay codebook-based CSI reporting scheme is for example beneficial for a wireless communication at mm-Wave (frequency range 2), where the transmission signal at the base station is associated with a single beam (single port) and the impulse response of the corresponding beam-formed downlink channel is characterized by only few channel delays/taps. The corresponding precoder is then based on few delay vectors (matrix $W_1$), which are aligned with the few channel taps/delays of the radio channel. Hence, for wireless communication for example at mm-Wave (frequency range 2), the feedback overhead for the PMI reporting (matrices $W_1$, $W_2$ and $W_3$) of the above precoder is much lower than that of a subband-based precoder described above.

The parameter $N_4$ may depend on the number of configured time-domain resources ($N_{st}$), where $N_{st}$ may be given by a number of OFDM symbols. As an example, the size of each Doppler-frequency vector is identical to the number of configured time-domain resources, $N_4 = N_{st}$. In another example, $N_4$ is a multiple of $N_{st}$, $N_4 = \beta N_{st}$, where $\beta > 1$ or $\beta < 1$. The parameter $\beta$ may be a priori known at the communication device, or configured via higher layer (e.g., RRC) by the base station or any other network entity.

Similar, the parameter $N_3$ denotes the size of the delay vectors and is associated with the configured frequency subband size of the precoder. The parameter $N_3$ may depend on the number of configured CQI subbands ($N_{CQI}$), where $N_{CQI}$ may be defined by a multiple of a CQI subband size that comprises a number of RBs. In one example, the size of each delay vector is identical to the configured CQI subbands ($N_{CQI}$), and $N_3 = N_{CQI}$. In another example, $N_3$ is a multiple of $N_{CQI}$, $N_3 = \alpha N_{CQI}$, where $\alpha > 1$. The parameter $\alpha$ may be a priori known at the communication device, or configured via higher layer (e.g., RRC) by the base station or any other network entity.

**Three-codebook based CSI reporting**

In accordance with embodiments, the communication device is configured with a CSI report configuration for one or more antenna port(s). The precoder performs precoding in the time/Doppler, space and delay domains for a number of layers over a set of configured frequency resources and time domain resources. The precoder matrix may be represented for a configured number of frequency-domain subbands $N_3$, a configured number of time-domain resources $N_4$, and a configured number of port(s) for a dual-polarized antenna layout for the r-th transmission layer by

$$W^{(r,p)} = P \sum_{i=0}^{L_r-1} \sum_{d=0}^{D_{r,i}-1} \sum_{v=0}^{F_{r,i,d}-1} \gamma_{r,p,i,d,v} b_{r,p,i} \otimes (d_{r,p,i,d}^* f_{r,p,i,d,v}^H),$$

(4)

where

- $L_r$ is the number of spatial beams/port selection vectors of the $r$-th transmission layer
- $D_{r,i}$ is the number of delay vectors of the $i$-th beam and $r$-th transmission layer,
- $F_{r,i,d}$ is the number of Doppler-frequency components for the $i$-th beam, $d$-th delay vector and $r$-th transmission layer,
- $\gamma_{r,p,d,v}$ is the combining coefficient associated with the $p$-th polarization (p=1,2), $i$-th beam, $v$-th Doppler-frequency component and $d$-th delay of the $r$-th transmission layer,
- $b_{r,p,i} \in C^{\overline{N}t \times 1}$ is the $i$-th beam/port-selection vector associated with the $p$-th polarization of the r-th transmission layer,
- $d_{r,p,i,d} \in C^{N_3 \times 1}$ is the $d$-th delay vector associated with the $i$-th beam vector, $p$-th polarization of the $r$-th transmission layer,
- $f_{r,p,d,v} \in C^{N_4 \times 1}$ is the $v$-th Doppler-frequency vector associated with the $p$-th polarization and with the $d$-th delay of the $r$-th transmission layer, and
- $P$ is a scalar normalization factor to ensure a certain total transmission power.

Note that for an arbitrary antenna layout, $W^{(r,p)} = W^{(r)}$, and $\overline{N}_t = N_t$, otherwise for a dual-polarized layout $\overline{N}_t = N_t/2$, where $N_t/2$ denotes the number of ports per polarization. The parameter $N_4$ denotes the size of each Doppler-frequency vector and is associated with the configured time-domain resources of the precoder. The parameter $N_4$ may depend on the number of configured time-domain resources ($N_{st}$), where $N_{st}$ may be given by a number of OFDM symbols. As an example, the size of each Doppler-frequency vector is identical to the number of configured time-domain resources, $N_4 = N_{st}$. In another example, $N_4$ is a multiple of $N_{st}$, $N_4 = \beta N_{st}$, where $\beta > 1$ or $\beta < 1$. The parameter $\beta$ may be a priori known at the communication device, or configured via higher layer (e.g., RRC) by the base station or any other network entity.

Similar, the parameter $N_3$ denotes the size of the delay vectors and is associated with the configured frequency subband size of the precoder. The parameter $N_3$ may depend on the number of configured CQI subbands ($N_{CQI}$), where $N_{CQI}$ may be defined by a multiple of a CQI subband size that comprises a number of RBs. In one example, the size of each delay vector is identical to the configured CQI subbands ($N_{CQI}$), and $N_3 = N_{CQI}$. In another example, $N_3$ is a multiple of $N_{CQI}$, $N_3 = \alpha N_{CQI}$, where $\alpha > 1$. The parameter $\alpha$ may be a priori known at the communication device, or configured via higher layer (e.g., RRC) by the base station or any other network entity.

## CSI Reporting

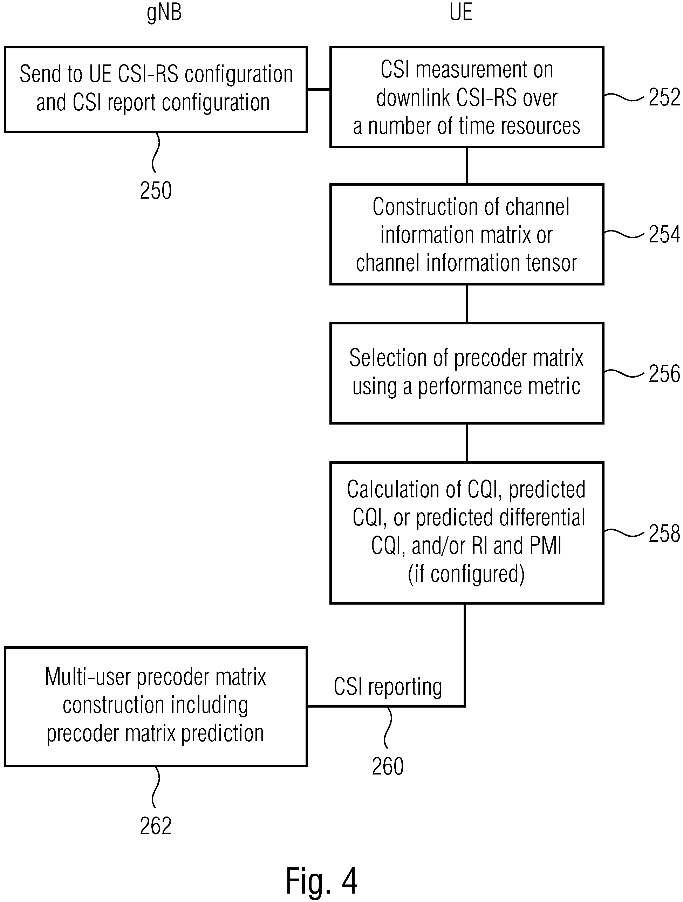

Fig. 4 is a flow diagram illustrating the configuration of CSI parameters, the CSI measurement, the precoder matrix calculation and the CSI reporting. The UE may be configured with a CSI-RS resource configuration via a higher layer (such as RRC) containing information about the number of assigned CSI-RS ports used for the transmission to the UE. The number of CSI-RS ports, $\overline{N}_t$, is equal to one for a single port transmission, or to $PN_1N_2$ (where P =1 for co-polarized array antennas, and P =2 for dual-polarized array antennas at the base station), and where $N_1$ and $N_2$ are the number of antenna ports of the first and second spatial dimensions of the gNB array, respectively. The UE is configured with a CSI reporting configuration via a higher layer and/or a physical layer (via DCI) that also contains information for an evaluation of the CSI feedback parameters, such as CQI, RI and PMI, at the UE. The base station or gNB signals via a higher layer or a physical layer at least parameters indicating the antenna ports and the dimension(s) of the codebook(s) used for the PMI calculation at the UE. The CQI, RI and PMI selection is performed at the UE.

At a step 250, the gNB or base station sends a CSI-RS configuration and CSI report configuration to the UE. The CSI-RS configuration may include a CSI-RS resource(s) configuration with respect to sub-clause 7.4.1.5 in TS 38.211 (see reference [1]) and with sub-clause 6.3.2 in TS.38.331 (see reference [4]). Further, an additional higher layer parameter configuration referred to as CSI-RS-BurstDuration is included.

The CSI-RS-BurstDuration is included to provide a CSI-RS design allowing to track the time-evolution of the channel. A UE may be configured with a CSI-RS resource set(s) configuration with the higher layer parameter CSI-RS-BurstDuration, in addition to the configurations from clause 7.4.1.5 in TS 38.211 (see reference [2]) and clause 6.3.2 in TS.38.331 (see reference [4]) mentioned above, to track the time-evolution of CSI. The time-domain-repetition of the CSI-RS, in terms of the number of consecutive slots the CSI-RS is repeated in, is provided by the higher layer parameter CSI-RS-BurstDuration. The possible values of CSI-RS-BurstDuration for the NR numerology $\mu$ are $2^\mu \cdot X_B$ slots, where $X_B \in \{0,1,2, ..., maxNumBurstSlots - 1\}$. The NR numerology $\mu = 0,1,2,3,4...$ defines, e.g., a subcarrier spacing of $2^\mu \cdot 15kHz$ in accordance with the NR standard.

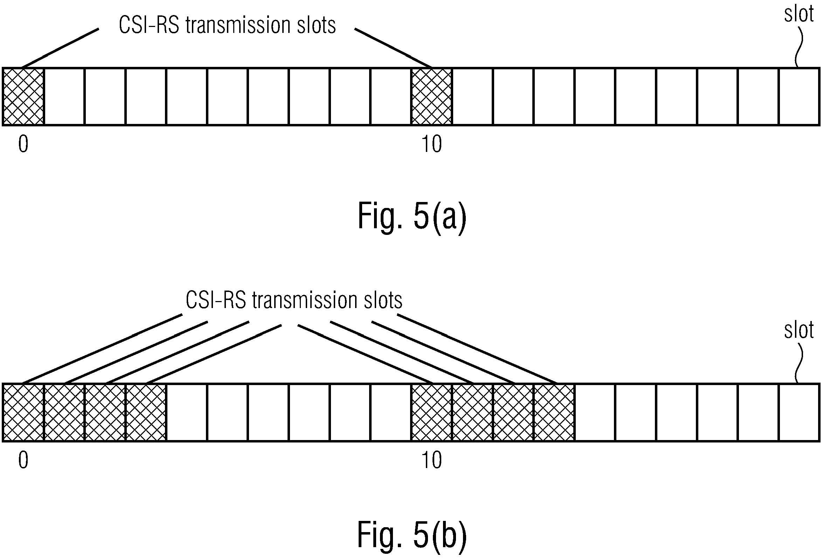

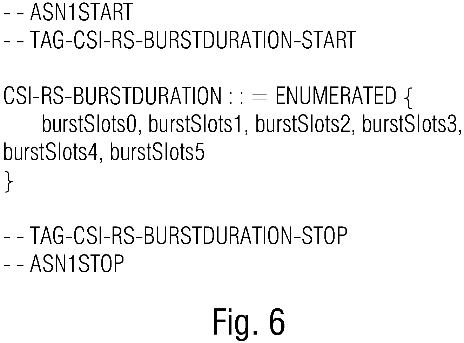

For example, when the value of $X_B = 0$ or the parameter CSI-RS-BurstDuration is not configured, there is no repetition of the CSI-RS over multiple slots. The burst duration scales with the numerology to keep up with the decrease in the slot sizes. Using the same logic used for periodicity of CSI-RS. Fig. 5(a) illustrates a CSI-RS with a periodicity of 10 slots and no repetition (CSI-RS-BurstDuration not configured or CSI-RS-BurstDuration = 0), and Fig. 5(b) illustrates a CSI-RS with a periodicity of 10 slots and repetition of 4 slots (CSI-RS-BurstDuration = 4). Fig. 6 illustrates a CSI-RS-BurstDuration information element. The information element of the new RRC parameter CSI-RS-BurstDuration is as follows: the value next to the text burstSlots indicates the value of $X_B$, which for a given New Radio numerology $\mu$ (see reference [1]) provides the burst duration $2^{\mu} \cdot X_B$ of the CSI-RS, i.e., the number of consecutive slots of CSI-RS repetition.

The burst-CSI-RS across multiple consecutive slots enables the extraction of time-evolution information of the CSI and for reporting of the precoder matrix, e.g. as a part of the PMI, in a way as described in more detail below. In other words, the UE may calculate the CQI, RI and PMI with a repetition of the CSI-RS resource(s) over multiple consecutive slots, and report them accordingly.

Returning to the flow diagram of Fig. 4, the CSI report configuration provided by the eNB may further include one or more of at least the following parameters:

○ a configuration of the CSI report configuration with respect to sub-clause 5.2.1.1 in TS 38.214 (see reference [2]), and the following higher layer parameters:
ReportQuantity listed in TS 38.331 (see reference [1]) with the following additional parameters:

- cri-RI-PMIDD-CQI
- cri-RI-PMIDy-CQI
- cri-RI-PMIDr-CQI
- cri-RI-LI-PMIDD-CQI
- cri-RI-LI-PMIDy-CQI
- cri-RI-LI-PMIDr-CQI
- cri-RI-PMIDD
- cri-RI-PMIDy
- cri-RI-PMIDr

The CRI (CSI-RS resource indicator), RI (rank indicator) and LI (layer indicator) mentioned in the reporting quantities are reported, i.e., the possible values reported and the format for reporting CRI, RI and LI are identical as the ones in TS 38.214 (see reference [2]) The PMI quantities mentioned in ReportQuantity are defined as:

- PMIDD - PMI values including the delay and the Doppler-frequency component configurations as described below;
- PMIDy - PMI values including only the delay component configuration (if configured) as described below, excluding the Doppler-frequency component(s);
- PMIDr- PMI values including only the Doppler-frequency component configuration as described below, excluding the delay component(s).

○ a parameter CQI-PredictionTime assigned with the value $K$ for CQI prediction (if configured).

The CQI value, predicted CQI value, etc. (if configured) as mentioned in the reporting quantity may be calculated as explained subsequently over multiple time slots. The values of the CQI reported are identical as mentioned in TS 38.214 (see reference [2]).

In addition, at least one of the following parameters may be signaled by the eNB to the user equipment via physical layer or higher layer (RRC) parameter(s):

○ The value of $N_4$ for the configuration of the Doppler-frequency component codebook.
○ If configured, the value of $N_3$ for the configuration of the delay component codebook.
○ If configured, the parameters $N_1$, $N_2$ for the configuration of the spatial beam/port-selection codebook. The parameters $N_1$, and $N_2$ are represented by *CodebookConfig-N1* and *CodebookConfig-N2*, respectively.
○ The oversampling factor $O_2$ used for oversampling of the delay codebook.
○ The oversampling factor $O_3$ used for oversampling of the Doppler-frequency codebook.

In response to the report configuration, the UE

- performs, at step 252, measurements on CSI-RS over a number of time resources,
- constructs, at step 254, the channel information matrix or channel information tensor;
- selects, at step 256, the precoder matrix for each layer (PMI selection) with respect to a specific performance metric, and/or
- calculates, at step 258, a CQI value, a predicted CQI value, or predicted differential CQI values (if configured) for a future time instant or for a set of future time instants using the selected precoder matrix for future time instants, and, optionally, selects a RI value (if configured) using the selected precoder matrix and the MIMO channel information, and

- sends, at step 260, the CSI report to the gNB.

The gNB, at step 262, reconstructs the precoder matrix (based on the reported PMI) to facilitate multi-user precoding matrix calculation and precoder matrix prediction for future time instants.

Other approaches operating on the basis of repeated reference signals may use other precoders or other techniques to determine the CSI feedback based on the repeated reference signals and to report determine the CSI feedback.

### CQI/PMI reporting

Once the UE is configured with a CSI-RS resource and a CSI reporting configuration (see step 250 in Fig. 4), the UE may estimate an un-quantized explicit CSI using measurements on the CSI-RS on PRBs, where the CSI-RS is configured over a number of consecutive time resources (OFDM symbols, slots, etc.) and a number of frequency resources (see step 252 in Fig. 4).

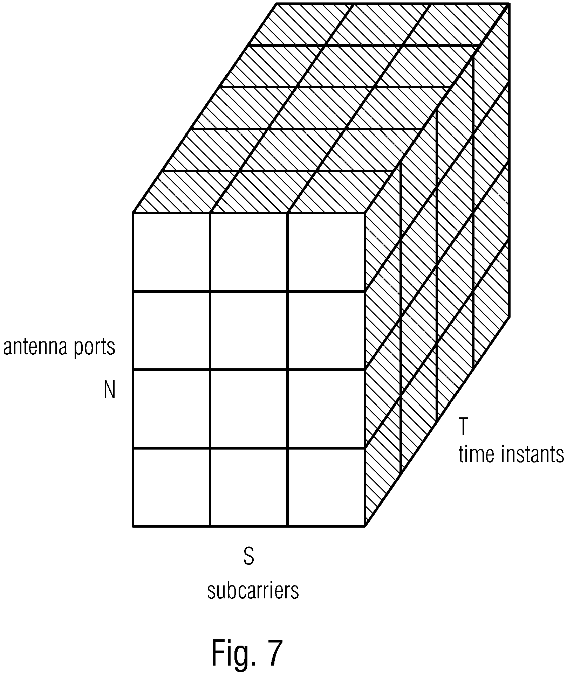

The explicit CSI may be represented by a two-dimensional matrix, or multi-dimensional channel tensor (a multi-dimensional array) $\mathcal{H}$ for a number of configured sub-bands and time domain resources and CSI-RS port(s) and UE port(s). An example of a channel tensor $\mathcal{H}$ is shown in Fig. 7. Here, the first, second and third dimension of the channel tensor represent the space, frequency, and time component of the time-variant frequency-selective MIMO channel, respectively.

In a next step, the UE calculates a CQI using the explicit CSI and a Doppler-based precoder matrix constructed using at least a codebook for the Doppler-frequency components of the precoder, and (if configured)

- a beam/port-selection codebook for the transmit-side space (beams) components of the precoder and/or
- a delay codebook for the delay components of the precoder.

### Codebook matrix configuration

The following embodiments describe the codebook matrix configuration for the above-explained single, double, or three-codebook Doppler-based precoder matrix structures.

#### Doppler-frequency codebook

In accordance with an embodiment, the Doppler-frequency vectors $\boldsymbol{f}$ (without index for simplicity) may be selected from a DFT-codebook matrix of size $N_4 \times N_4$ or an oversampled DFT-codebook matrix of size $N_4 \times N_4 O_3$. The oversampled DFT-codebook matrix contains $N_4 O_3$ vectors, where each vector is represented by a length-$N_4$ DFT-vector.

In one embodiment, each DFT-vector is presented by $a_l = \left[1, e^{j\frac{2\pi l}{O_3 N_4}}, ..., e^{j\frac{2\pi l(N_4-1)}{O_3 N_4}}\right]^T$, $l = 0,.., O_3 N_4 - 1$. In another embodiment, each DFT-vector is presented by $a_l = \left[1, e^{-j\frac{2\pi l}{O_3 N_4}}, ..., e^{-j\frac{2\pi l(N_4-1)}{O_3 N_4}}\right]^T$, $l = 0,..., O_3 N_4 - 1$. Each entry in the codebook matrix is associated with a specific Doppler-frequency. The oversampled DFT-codebook matrix is parameterized by the oversampling factor $O_3 = 1,2, ....$

In accordance with an embodiment, the Doppler-frequency vectors $\boldsymbol{f}$ may be selected from a discrete-cosine-transform (DCT)-codebook matrix of size $N_4$.

#### Delay codebook

In accordance with an embodiment, if the UE is configured with a delay codebook, the delay vectors d (without index for simplicity) may be selected from a DFT-codebook matrix of size $N_3 \times N_3$ or an oversampled DFT-codebook matrix of size $N_3 \times N_3 O_2$. The oversampled DFT-codebook matrix contains $N_3 O_2$ vectors, where each vector is represented by a length-$N_3$ DFT-vector.

In one embodiment, each DFT-vector is presented by $a_l = \left[1, e^{j\frac{2\pi l}{O_2 N_3}}, ..., e^{j\frac{2\pi l(N_3-1)}{O_2 N_3}}\right]^T$, $l = 0,.., O_2 N_3 -$ 1. In another embodiment, each DFT-vector is presented by $a_l = \left[1, e^{-j\frac{2\pi l}{O_2 N_3}}, ..., e^{-j\frac{2\pi l(N_3-1)}{O_2 N_3}}\right]^T$, $l = 0,...,O_2 N_3 - 1$. Each entry in the codebook matrix is associated with a specific delay index. The oversampled DFT-codebook matrix is parameterized by the oversampling factor $O_2 = 1,2, ....$

In accordance with an embodiment, the delay vectors $d$ may be selected from a discrete-cosine-transform (DCT)-codebook matrix of size $N_3$.

Beam/port-selection codebook

In accordance with embodiments, if the UE is configured with a beam/port-selection codebook, the vectors (spatial beams) $b$ (without indexation) may be selected from a DFT codebook matrix or an oversampled DFT-codebook matrix of size $N_1 N_2 \times O_{1,1} N_1 O_{1,2} N_2$. The DFT-codebook matrix is parameterized by the two oversampling factors $O_{1,1} \in \{1,2,3,..\}$ and $O_{1,2} \in \{1,2,3,..\}$. The DFT-codebook matrix contains a set of vectors, where each vector is represented by a Kronecker product of a length-$N_1$ DFT-vector $v_l = \left[1, e^{j\frac{2\pi l}{O_{1,1} N_1}}, ..., e^{j\frac{2\pi l(N_1-1)}{O_{1,1} N_1}}\right]^T$, $l = 0,...,O_{1,1} N_1 - 1$ corresponding to a vertical beam and a length-$N_2$ DFT-vector $u_m = \left[1, e^{j\frac{2\pi m}{O_{1,2} N_2}}, ..., e^{j\frac{2\pi m(N_2-1)}{O_{1,2} N_2}}\right]^T$, $m = 0,...,O_{1,2} N_2 - 1$ corresponding to a horizontal beam.

On the other hand, if the CSI-RS is beamformed/precoded, the vectors (spatial beams) $b$ may be selected from a port-selection codebook, as described in the following embodiment.

The UE may be configured with a CSI-RS reporting configuration via a higher layer for reporting a CQI and/or PMI (if configured) for beam-formed CSI-RS. In this case, the vectors (spatial beams) $b$ (without indexation) may be selected from a port-selection codebook matrix, represented by $N_1 N_2$-length column vectors, where the $m$-th vector ($m = 1, ...,N_1 N_2$) contains a single 1 at the $m$-th position and zeros elsewhere.

The oversampled factors $O_{1,1}$, $O_{1,2}$, $O_2$, $O_3$ of the DFT-codebook matrices may be configured via a higher layer (e.g., RRC, or MAC) signaling or may be configured as a part of the DCI (physical layer signaling) in the downlink grant from the gNB to the UE.

In accordance with other embodiments, the oversampled factors $O_{1,1}$, $O_{1,2}$, $O_2$, $O_3$ of the DFT-codebook matrices may be known by the UE. This means, the oversampling factors are defined by the specification.

## Beam configuration

In accordance with embodiments, the UE may be configured with a beam/port-selection codebook and a beam configuration. The beam configuration contains one or more parameters, defining the number of beams $L_r$ per transmission layer, subset of transmission layers, or all transmission layers of the precoding matrix.

In one embodiment, the number of beams $L_r$ may be configured to be identical over all layers per transmission rank. In another embodiment, the number of beams is different per layer, or subset of layers per transmission rank. For example, for a rank-4 transmission, the first and second layers use an identical number of beams, and the third and fourth layers use an identical number of beams, where the number of beams of layer 3 and 4 is different to the number of beams of layer 1 and 2.

The number of beams may also depend on the transmission rank. For example, the number of beams per layer may decrease or increase with the transmission rank. For example, for a rank-1 transmission, the UE is configured with $L_1$ beams, and for a rank-4 transmission the UE is configured with $\overline{L}_1 < L_1$ beams, where for example $\overline{L}_1 = \cdots = \overline{L}_4$.

In accordance with embodiments, the one or more parameters defining the number of beams per transmission layer, subset of transmission layers, or all transmission layers of the precoding matrix are RRC signaled by the gNB or any other network entity to the UE.

In accordance with embodiments, the one or more parameters defining the number of beams per transmission layer, subset of transmission layers, or all transmission layers of the precoding matrix are a priori known at the UE.

In accordance with embodiments, the one or more parameters defining the number of beams per transmission layer for a rank-1 transmission may be configured by the base station or any other network entity, and the number of beams for the other transmission layers are based on the configured number of beams per transmission layer for the rank-1 transmission. For example, a value of $L_1$ beams per layer may be configured for rank-1 and rank-2 transmissions, and a value of $\alpha L_1$ may be configured for a rank-3 or rank-4 transmission, where the parameter $\alpha$ is either higher-layer configured or a priori known at the UE.

**Delay configuration**

In accordance with embodiments, the UE may be configured with delay codebook and a delay configuration. The delay configuration contains one or more parameters, defining the number of delays per transmission layer, subset of transmission layers, or all transmission layers of the precoding matrix.

In one embodiment, the number of delays may be configured to be identical for all layers, $D_r = D$, $\forall r$ per transmission rank. In another embodiment, the number of delays may be configured to be different for subset of layers per transmission rank. For example, for a rank-4 transmission, the first and second layers use an identical number of delays, and the third and fourth layers use an identical number of delays, where the number of delays of layer 3 and 4 is different to the number of delays of layer 1 and 2. For example, for a rank-1 transmission, the UE is configured with $D_1$ delays, and for a rank-4 transmission the UE is configured with $\overline{D}_4 = \cdots = \overline{D}_1 < D_1$ delays.

In accordance with embodiments, the parameter $D_r$ (or D) may depend on the configured delay codebook size ($N_3$), such that $D_r = func(N_3)$. For example, the parameter $D_r$ may be given by $D_r = pN_3$, where the parameter $p \leq 1$ controls the feedback overhead. The parameter $p$ may be configured via higher layer (RRC parameter) or physical layer (L1 parameter) by the gNB or another network entity or it is a priori known to the UE. Examples for $p$ are $p \in \left\{ \frac{1}{8}, \frac{1}{4}, \frac{1}{2}, \frac{3}{4} \right\}$.

In addition, the UE may be configured with a beam/port-selection codebook. Then, the delay configuration contains one or more parameters, defining the number of delays per transmission layer and beam, subset of transmission layers (per beam or subset of beams), or all transmission layers and beams of the precoding matrix.

The number of delays may be configured to be identical for all beams per layer, or subset of beams per layer.

In accordance with embodiments, the one or more parameters defining the number of delays per transmission layer, subset of transmission layers, or all transmission layers of the precoding matrix are RRC signaled by the gNB or any other network entity to the UE.

In accordance with embodiments, the one or more parameters defining the number of delays per transmission layer, subset of transmission layers, or all transmission layers of the precoding matrix are a priori known at the UE.

Doppler-frequency configuration

In accordance with embodiments, the UE may be configured with Doppler-frequency codebook and a Doppler-frequency configuration. The Doppler-frequency configuration contains one or more parameters, defining the number of Doppler-frequency components per transmission layer, subset of transmission layers, or all transmission layers of the precoding matrix.

In one embodiment, the number of Doppler-frequency components is configured to be identical for all layers, $F_r = F, \forall r$ (and possibly per configured subband) per transmission rank. In another embodiment, the number of Doppler-frequency components is identical for a subset of layers per transmission rank. The number of Doppler-frequency components may depend on the transmission rank of the precoder matrix. For example, the number of Doppler-frequency components may be decreasing with the transmission rank. For example, for a rank-1 transmission, the UE is configured with $\overline{F}_1$ Doppler-frequency components (for all subbands), and for a rank-4 transmission the UE is configured with $F_1 = \cdots = F_4 < \overline{F}_1$ Doppler-frequency components (for all subbands).

In accordance with embodiments, the parameter $F_r$ (or F) may depend on the configured Doppler-frequency codebook size ($N_4$), such that $F_r = func(N_4)$. For example, the parameter $F_r$ may be given by $F_r = pN_4$, where the parameter $p \leq 1$ controls the feedback overhead. The parameter $p$ may be configured via higher layer (RRC parameter) or physical layer (L1 parameter) by the gNB or another network entity or it is a priori known to the UE. Examples for $p$ are $p \in \left\{ \frac{1}{8}, \frac{1}{4}, \frac{1}{2}, \frac{3}{4}, 1 \right\}$.

In accordance with further embodiments, the UE may be configured with a delay codebook. Then, the Doppler-frequency configuration contains one or more parameters, defining the number of Doppler-frequency components per transmission layer and delay, subset of transmission layers (per delay or subset of delays), or all transmission layers and delays of the precoding matrix.

The number of Doppler-frequency components may be configured to be identical for all delays per layer, or subset of delays and beams per layer.

In accordance with further embodiments, the UE may be configured with a beam/port-selection codebook. Then, the Doppler-frequency configuration contains one or more parameters, defining the number of Doppler-frequency components per transmission layer, delay and beam, subset of transmission layers (per delay and beam or subset of delays), or all transmission layers and delays and beams of the precoding matrix.

The number of Doppler-frequency components may be configured to be identical for all delays per beam and per layer, or subset of delays and beams per layer.

In accordance with embodiments, the one or more parameters defining the number of Doppler-frequency components per transmission layer, subset of transmission layers, or all transmission layers of the precoding matrix are RRC signaled by the gNB or any other network entity to the UE.

In accordance with embodiments, the one or more parameters defining the number of Doppler-frequency components per transmission layer, subset of transmission layers, or all transmission layers of the precoding matrix are a priori known at the UE.

### UE-side selection of precoder matrix *W*

The UE selects a preferred Doppler-delay precoder matrix *W* based on a performance metric (see step 256 in Fig. 4).

For example, the UE may select the precoder matrix *W* that optimizes the mutual-information $I(W;)\mathcal{H}$ (or any other performance metric), which is a function of the Doppler-delay precoder matrix *W* and the multi-dimensional channel matrix/tensor $\mathcal{H}$, for each configured frequency subband and time resource.

In the following, embodiments of the selection of the precoder matrix are described for the case that the UE is configured with a spatial beam codebook, a delay codebook and a Doppler-frequency codebook. The spatial beams, the Doppler frequencies and the delays may be selected step-wise. For example, for a rank-1 transmission, in a first step, the UE selects the *L* spatial beams that optimize the mutual information:

$$\hat{b}_1, \dots, \hat{b}_L = argmax\, I(\mathcal{H}; b_1, \dots, b_L)\ \text{(for rank 1)}.$$

In a second step, the UE calculates the beam-formed channel matrix/tensor $\hat{\mathcal{H}}$ based on the selected *L* spatial beams $\hat{b}_1, \dots, \hat{b}_L$.

In a third step, the UE selects the Doppler-frequency vectors, delay vectors and Doppler-delay-beam combining coefficients, where the Doppler-frequency and delay vectors are selected from the delay and Doppler-frequency codebooks, respectively, such that the mutual information $I(\hat{\mathcal{H}}; W|\hat{b}_1, \dots, \hat{b}_L)$ is optimized.

### UE-side selection of RI

The UE may select the rank indicator, RI, for reporting (see step 258 in Fig. 4). When RI reporting is configured at the UE, the UE reports a rank indicator indicating a total number of layers for the transmission. The rank indicator is selected with respect to the determined precoder matrix $W^{(r)}(r = 1,..,R)$, and denotes the average number of layers supported by the precoded time-variant frequency-selective MIMO channel.

### UE-side selection of CQI

The UE may select the channel quality indicator, CQI, for reporting (see step 258 in Fig. 4). When CQI reporting is configured at the UE, the UE reports a preferred CQI based on a specific performance metric (e.g., signal-to-interference and noise ratio (SINR), average bit error rate, average throughput, etc.).

For example, the UE may select the CQI that optimizes the average block error rate

$$block\_error\_rate(\mathcal{H}|W^{(r)}\,(r = 1,..,R))$$

at the UE for the selected precoder matrix $W^{(r)}$ ($r = 1,..,R$) and a given channel matrix or channel matrix/tensor $\mathcal{H}$ for

the for the configured time and frequency domain resources. The CQI value represents an "average" CQI supported by the precoded time-variant frequency-selective channel for the configured time and frequency domain resources.

In accordance with embodiments, the UE is configured to report a single CQI value for the configured number of subbands (e.g., per CQI subband) using the selected precoder matrix $W^{(r)}$ for the configured time and frequency domain resources.

In accordance with embodiments, the UE is configured to report a CQI per subband (e.g., per CQI subband) using the selected precoder matrix $\boldsymbol{W}^{(r)}$ for the configured time and frequency domain resources.

**Reporting of selected delays, beams and Doppler-frequency components from the codebooks**

In the following embodiments of the indication and reporting of the selected combining coefficients of the precoder matrix for different codebook configurations are described.

*1. Doppler-frequency subset indication and reporting*

In accordance with embodiments, the UE is configured with at least a Doppler-frequency codebook. The UE selects per transmission layer or for a subset of transmission layers, a subset of Doppler-frequency components vectors from the Doppler-frequency codebook.

The selected Doppler-frequency vectors from the Doppler-frequency codebook are indicated in the CSI report by a Doppler-frequency basis subset indicator per transmission layer, or subset of transmission layers.

In one embodiment, the Doppler-frequency basis subset indicator for each layer is given by a bitmap, where each bit in the bitmap is associated with a Doppler-frequency vector from the Doppler-frequency codebook. A "1" may indicate that the associated Doppler-frequency vector is selected, and a "0" may indicate that the associated Doppler-frequency vector is not selected.

In another embodiment, the Doppler-frequency basis subset indicator for the r-th layer is given by a $\left\lceil \log_2 \binom{N_4}{F_r} \right\rceil$ bit indicator (possibly per subband), where $N_4$ denotes the number of vectors in the Doppler-frequency codebook (assuming no oversampling for simplicity), and $F_r$ denotes the number of Doppler-frequency components of the r-th layer.

Note that the Doppler-frequency basis subset indicator may be identical for a subset of layers. In such a case, a Doppler-frequency basis subset indicator is reported per subset of layers.

In accordance with an embodiment, when the UE is configured with a delay codebook and Doppler-frequency codebook, the Doppler-frequency basis subset indicator per layer may be identical for all delays of the layer. In addition, the UE may indicate the selected Doppler-frequencies components per delay from the Doppler-frequency basis subset indicator by a sub-Doppler-frequency basis subset indicator.

In one embodiment, the sub-Doppler-frequency basis subset indicator is represented by a bitmap, where each bit in the bitmap is associated with a Doppler-frequency vector of the Doppler-frequency basis subset indicator. A "1" may indicate that the associated Doppler-frequency vector is selected, and a "0" may indicate that the associated Doppler-frequency vector is not selected.

In another embodiment a sub-Doppler-frequency basis subset indicator is represented by a $\left\lceil \log_2 \binom{A}{B} \right\rceil$ bit indicator, where A denotes the number of selected Doppler-frequency components of the Doppler-frequency basis subset indicator, and B denotes the number of selected Doppler-frequency components of the sub-Doppler-frequency basis subset indicator. In the case of a $\left\lceil \log_2 \binom{A}{B} \right\rceil$ bit indicator is used for the sub-Doppler-frequency basis subset indicator, the UE also indicates the selected Doppler-frequency components B in the CSI report.

In order to save feedback overhead, the sub-Doppler-frequency basis subset indicators for a subset of delays may be identical. In one embodiment, the sub-Doppler-frequency basis subset indicator of the d-th delay of the first polarization may be identical with the sub-Doppler-frequency basis subset indicator of the d-th delay of the second polarization. Then, only a single sub-Doppler-frequency basis subset indicator per delay and polarization may be reported.

Note a sub-Doppler-frequency basis subset indicator may also be identical for subset of delays and/or subset of layers in the case that the Doppler-frequency basis subset indicator is identical for a subset of delays and/or subset of layers.

In accordance with an embodiment, when the UE is configured with a delay codebook, a Doppler-frequency codebook and a beam codebook, the Doppler-frequency basis subset indicator per layer may be identical for all delays per beam of a layer and only a single Doppler-frequency basis subset indicator per beam of a layer is contained in the CSI report. The UE may indicate the selected Doppler-frequencies components per delay and beam from the Doppler-frequency basis subset indicator by a sub-Doppler-frequency basis subset indicator as described above.

In accordance with an embodiment, when the UE is configured with a delay codebook, a Doppler-frequency codebook and a beam codebook, the Doppler-frequency basis subset indicator per layer may be identical for all delays and beams of a layer and only a single Doppler-frequency basis subset indicator per layer is contained in the CSI report. The UE may indicate the selected Doppler-frequencies components per delay and per beam from the Doppler-frequency basis subset indicator by a sub-Doppler-frequency basis subset indicator, e.g., by a bitmap, or a combinatorial bit indicator as explained above.

In accordance with an embodiment, the UE is configured with a delay codebook, Doppler-frequency codebook and beam codebook, and to reduce the feedback overhead for reporting a Doppler-frequency basis subset indicator, the Doppler-frequency basis subset indicator may be identical for subset of delays, subset of beams and/or subset of layers, where a subset of delays, beams or layers may contain at least one component. In such a case, only a single Doppler-frequency basis subset indicator for the subset may be reported.

In accordance with an embodiment, the UE is configured with a delay codebook, Doppler-frequency codebook and beam codebook, and to reduce the feedback overhead for reporting a sub-Doppler-frequency basis subset indicator, the sub-Doppler-frequency basis subset indicator may be identical for subset of delays, subset of beams and/or subset of layers, where a subset of delays, beams or layers may contain at least one component. In such a case, only a single sub-Doppler-frequency basis subset indicator for the subset may be reported.

*2. Delay subset indication and reporting*

In accordance with embodiments, the UE is configured with a delay codebook and a Doppler-frequency codebook. The UE selects per transmission layer a subset of delay vectors from the delay codebook.

The selected delay vectors from the delay codebook are indicated in the CSI report by a delay basis subset indicator per transmission layer, or subset of transmission layers.

In one embodiment, the delay basis subset indicator for each layer is given by a bitmap, where each bit in the bitmap is associated with a delay vector from the delay codebook. A "1" may indicate that the associated delay vector is selected, and a "0" may indicate that the associated delay vector is not selected.

In embodiment example, the delay basis subset indicator for the r-th layer is given by a $\left\lceil \log_2 \binom{N_3}{D_r} \right\rceil$ bit indicator, where $N_3$ denotes the number of vectors in the delay codebook (assuming no oversampling for simplicity) and $D_r$ denotes the number of delays of the r-th layer.

Note that the delay basis subset indicator may be identical for a subset of layers. In such a case, a delay basis subset indicator is reported per subset of layers.

In accordance with an embodiment, when the UE is configured with a delay codebook, Doppler-frequency codebook and spatial codebook, the delay basis subset indicator per layer is identical for all beams of the layer. The UE may indicate the selected delay components per beam from the delay basis subset indicator by a sub-delay basis subset indicator.

In one embodiment, the sub-delay basis subset indicator is represented by a bitmap, where each bit in the bitmap is associated with a delay vector of the delay basis subset indicator. A "1" may indicate that the associated delay vector is selected, and a "0" may indicate that the associated delay vector is not selected.

In another embodiment a sub-delay basis subset indicator is represented by a $\left\lceil \log_2 \binom{A}{B} \right\rceil$ bit indicator, where A denotes the number of selected delay components of the delay basis subset indicator, and $B$ denotes the number of selected delay components of the sub-delay basis subset indicator. In the case of a $\left\lceil \log_2 \binom{A}{B} \right\rceil$ bit indicator is used for the sub-delay basis subset indicator, the UE also indicates the selected delay components $B$ in the CSI report.

In order to save feedback overhead, the sub-delay basis subset indicators may be identical for a subset of beams and/or subset of layers, where a subset of beams or layers may contain at least one component. In such a case, only a single sub-delay basis subset indicator for the subset may be reported.

In one embodiment, the sub-delay basis subset indicator of the u-th beam of the first polarization may be identical with the sub-delay basis subset indicator of the u-th beam of the second polarization. Then, only a single sub-delay basis subset indicator per beam for the two polarizations may be reported.

*3. Beam indication and reporting*

In accordance with an embodiment, when the UE is configured with a beam/port-selection codebook and a Doppler-frequency codebook, the UE selects per transmission layer a subset of beam vectors from the beam/port-selection codebook.

The selected beam vectors from the beam/port-selection codebook are indicated in the CSI report by a beam/port-selection basis subset indicator per transmission layer, or subset of transmission layers.

In one embodiment, the beam/port-selection basis subset indicator for each layer is given by a bitmap, where each bit in the bitmap is associated with a beam/port-selection vector from the beam/port-selection codebook. A "1" may indicate that the associated beam/port-selection vector is selected, and a "0" may indicate that the associated beam/port-selection vector is not selected.

In another embodiment, the beam/port-selection basis subset indicator for the r-th layer is given by a

$$\left\lceil \log_2 \binom{N_t}{L_r} \right\rceil$$

bit indicator, where $N_t$ denotes the number of vectors in the beam/port-selection codebook (assuming no oversampling for simplicity), and $L_r$ denotes the number of beam/port-selection components of the r-th layer.

Note that the beam/port-selection basis subset indicator may be identical for a subset of layers. In such a case, a single beam/port-selection basis subset indicator is reported per subset of layers.

Note that the beam/port-selection basis subset indicator may be identical for the two polarizations of the transmit antenna array. In such a case, a single beam/port-selection basis subset indicator is reported for the two polarizations.

In accordance with embodiments, in order to reduce the UE calculation complexity for selecting the $L_r$ beam vectors from the DFT-based beam/port-selection codebook, the beam vectors in the DFT-based codebook may be grouped into $O_{1,1} \times O_{1,2}$ subgroups, where each subgroup ($1 \leq q_{1,1} \leq O_{1,1}, 1 \leq q_{1,2} \leq O_{1,2}$) contains $N_1 N_2$ orthogonal DFT vectors. The UE selects the $L_r$ (or L) DFT beam vectors for the r-th layer (or all layers) from a single subgroup and reports the selected subgroup indices ($q_{1,1}, q_{1,2}$) to the gNB via higher layer (e.g., MAC or RRC parameter) or physical layer (e.g., L1 parameter).

**Configuration of reported number of non-zero coefficients**

In order to control the feedback overhead for reporting the combining coefficients, in accordance with embodiments, the UE is configured to select $K^{(r)}$ or less than $K^{(r)}$ non-zero combining coefficients for the r-th layer of the precoder matrix, to report the selected non-zero combining coefficients for all layers of the precoder matrix, and to indicate the selected coefficients in the CSI report.

The selected non-zero coefficients for the r-th layer may be indicated by a bitmap, where each bit in the bitmap is associated with a selected Doppler-frequency component from the Doppler-frequency subset basis indicator, with a selected delay component from the delay subset basis indicator (if a delay codebook is configured) and with a selected beam component from the beam subset basis indicator possibly per polarization (if a beam codebook is configured).

A "1" in the bitmap may indicate that the associated combining coefficient is selected and reported and a "0" in the bitmap may indicate that the combining associated combining coefficient is zero and not reported by the UE.

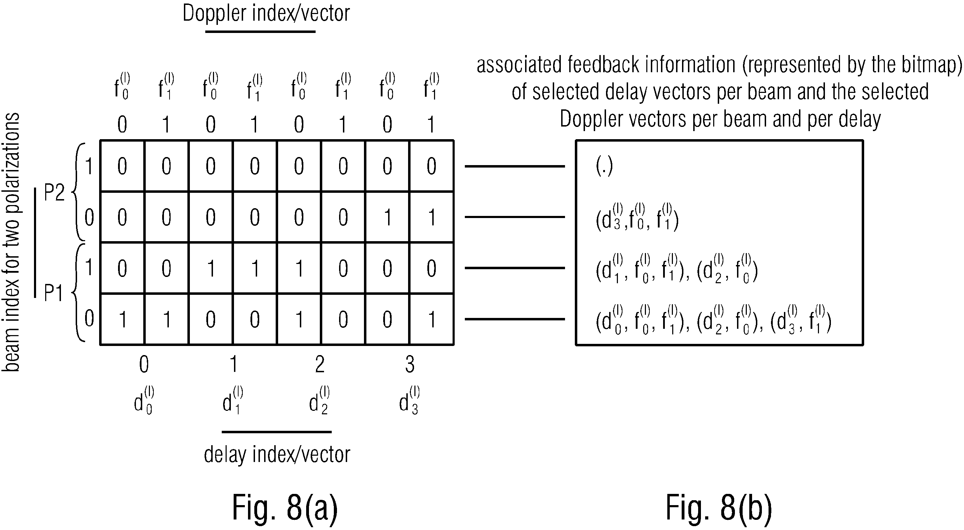

Fig. 8 illustrates an example of a bitmap for a precoder configured with three codebooks for the selection of delay vectors per beam and Doppler vectors per delay and per beam (see Fig. 8(a)) and corresponding feedback information for the configuration $L_r$ = 2 per polarization, D = 4 delay vectors (common to all beam indices) per beam and F = 2 Doppler vectors (common to all beam and delay indices) per beam and per delay (see Fig. 8(b)). The bitmap is contained in the CSI report and reported to the gNB. The gNB, using the bitmap and the knowledge about the delay and Doppler vectors derives the feedback (see Fig. 8(b)) without the need to receive the respective vectors. In accordance with embodiments, the UE reports the bitmap as a part of the CSI report to the gNB via higher layer (e.g., MAC or RRC) or physical layer (L1).

The selected non-zero coefficients for the r-th layer may be indicated by a $\left\lceil \log_2 \binom{A}{B} \right\rceil$ bit indicator, where $A$ denotes a combination of the product of the selected number of Doppler-frequency components from the Doppler-frequency subset basis indicator, the selected number of delay components from the delay subset basis indicator (if a delay codebook is configured), and the selected number of beam components from the beam subset basis indicator possibly per polarization (if a beam codebook is configured), and $B$ denotes the number of selected non-zero coefficients of the r-th layer.

In accordance with embodiments, the UE may be configured by the gNB with the higher layer parameter(s) $K^{(r)}$, representing the maximum number of non-zero coefficients the UE reports for the r-th layer of the CSI matrix. The UE may be configured with different or identical $K^{(r)}$ per layer, or per layer-group (i.e., a subset of layers).

In the following, embodiments for the parameter configuration $K^{(r)}$ are presented. In one embodiment, the parameter $K^{(0)}$ is configured for the first layer, and the parameters $K^{(r)}$, $r > 0$ for the higher layers are derived by the UE by a known rule. For example, for RI=1, the UE is configured by the gNB with $K^{(0)}$ and for RI=2, $K^{(1)} = K^{(0)}$. In another embodiment, the UE is configured by a single parameter $K$ that denotes the total number of non-zero coefficients across all layers.

The UE then assigns the number of non-zero coefficients per layer such that $\sum_{r=0}^{RI-1} K^{(r)} \leq K$ and reports the number of non-zero coefficients per layer or the total number of non-zero coefficients across all layers to the gNB. For instance, for RI = 1, the UE may be configured with a single parameter $K$ and the UE assigns $K^{(0)} \leq K$ coefficients to layer 1 and reports the same to the gNB.

In accordance with embodiments, the parameter $K^{(r)}$ may depend on the number of configured delay components $D_r$, the number of configured Doppler-frequency components $F_r$, and the number of configured beams/ports $L_r$, such that $K^{(r)} = func(D_r, F_r, L_r)$. For example, the parameter $K^{(r)}$ may be given by $K^{(r)} = \beta 2 D_r F_r L_r$ or $K^{(r)} = \beta D_r F_r L_r$, where the parameter $\beta \leq 1$ controls the feedback overhead. The parameter $\beta$ may be configured via higher layer (RRC parameter) or physical layer (L1 parameter) by the gNB or another network entity. Examples for $\beta$ are $\beta \in \left\{ \frac{1}{8}, \frac{1}{4}, \frac{1}{2}, \frac{3}{4}, 1 \right\}$.

### PMI reporting

The UE may select the precoder matrix indicator, PMI, for reporting (see step 258 in Fig. 4). When PMI reporting is configured at the UE, the UE reports at least a two-component PMI.

The PMI report may consist of two parts, where the first part has a fixed size and is used to indicate the size of the payload of the second part. The two PMI parts are independently encoded. The second PMI part has a varying payload size and may contain at least the basis subset indicator(s) for the different codebooks, the information on the transmission rank, and the quantized combining coefficients for all layers. In order to indicate the payload size of the CSI part 2, the CSI part 1 may contain at least the information on the number of quantized combining coefficients per layer or across all layers in PMI part 1 and possibly the rank of the precoder matrix.

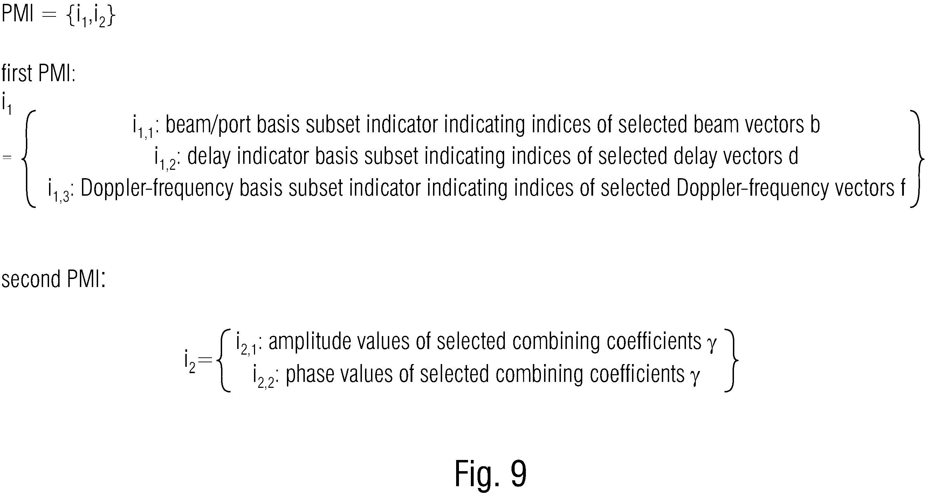

Fig. 9 illustrates an example of the PMI feedback for a rank-1 transmission assuming three codebooks for the precoder matrix. The first PMI part as shown in Fig 9 contains at least the basis subset indictors for the Doppler-frequency, delay and beam vectors selected from the Doppler, delay and beam codebooks. To report the combining coefficients from the UE to the gNB or any other network entity, the UE may quantize the coefficients using a codebook approach. The second PMI part as shown in Fig 9 contains at least the quantized combining coefficients to which the Doppler, delay and beam basis subset indicators are associated with. The two-component PMIs are reported to the gNB or any other network entity

In accordance with embodiments, the UE reports the CSI report using the physical uplink shared channel (PUSCH) to the gNB or any other network entity.

### Precoder construction at the gNB

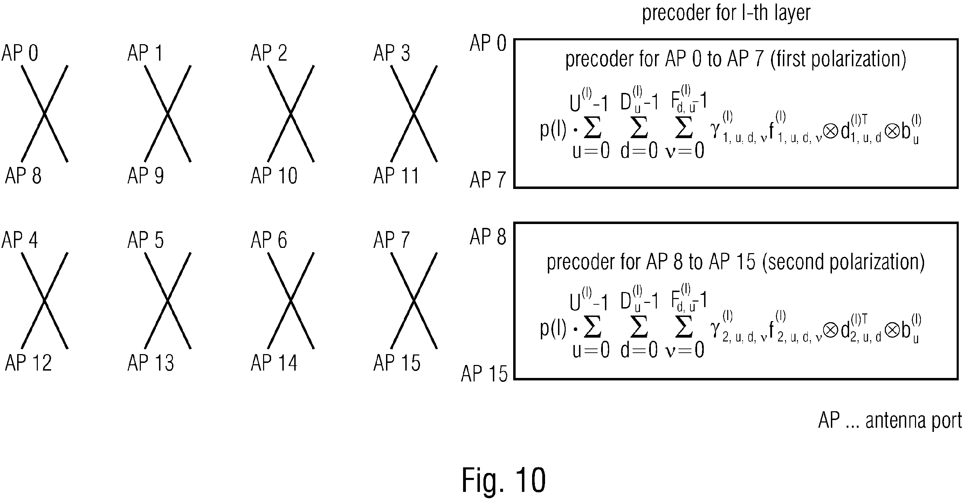

The gNB may use the two-component PMI feedback from the UE to construct the precoder matrix according to the codebook-based construction shown in Fig. 10, which illustrates the codebook based construction of the *r-th* layer precoder at the gNB and the association of the *r-th* layer precoder with the antenna ports (AP) for an example configuration $N_1 = 4, N_2 = 2, P = 2$. Note that the following codebook based construction is described for the case of a precoding matrix configured with Doppler-frequency, delay and beam codebooks. Note that other cases such as a precoding matrix configured with only a Doppler-frequency codebook, or a precoding matrix configured with a Doppler-frequency codebook and delay codebook are straightforward, and therefore not explicitly discussed in the following.

The precoder matrix information is used to calculate a multi-user precoding matrix which is applied to the transmission signals to adapt the transmission parameters to the current multi-user channel conditions. The above Doppler-based precoder matrix definitions also facilitate the prediction of precoder matrices for future time instances. In this way, the number of CSI reports may be drastically reduced and feedback overhead is saved.

To facilitate precoder matrix prediction for future time instants, the Doppler-frequency vectors *f* (without index for simplicity) may be shifted per block of $N_4$ time resources:

$$t(q) = e^{j\frac{2\pi k(q-1)}{O_3}} f,$$

where the vector $f = \left[1, e^{j\frac{2\pi k}{O_3 N_4}}, \ldots, e^{j\frac{2\pi k(N_4-1)}{O_3 N_4}}\right]^T$ is selected by the UE from the Doppler-frequency codebook. The predicted precoder matrix for the $r$-th layer, $p$-th polarization and the time domain resources of the $q$-th block ($q = 1,..,Q$) is given by

$$\widehat{W}^{(r,p)}(q) = P \sum_{i=0}^{L_r-1} \sum_{d=0}^{D_{r,l}-1} \sum_{v=0}^{F_{r,l,d}-1} \gamma_{r,p,i,d,v} b_{r,p,l} \otimes (d^*_{r,p,i,d} t^H_{r,p,i,d,v}(q)).$$

The predicted precoding matrices may be used in predictive multi-user scheduling algorithms that attempt to optimize, for example, the throughput for all users by using the knowledge of current and future precoder matrices of the users.

## Codebook for precoder combining coefficients:

In accordance with embodiments, the combining coefficients $\gamma$ (without index for simplicity) indicated to the communication device are selected from a codebook and may be represented by one of the following schemes:

$$(1) \quad \gamma = \hat{\gamma}\,\phi,$$

where

- $\hat{\gamma}$ is a amplitude coefficient which is quantized with $N$ bits; and
- $\phi = \exp(-j2\pi c)$ represents a phase which is represented by a BPSK, or QPSK, or 8PSK, and any higher-order constellation, or

$$(2) \quad \gamma = Re\{\gamma\} + jImag\{\gamma\},$$

where

- $Re\{\gamma\}$ and $Imag\{\gamma\}$ represent the real and imaginary part of $\gamma$, and are quantized with $N_r$ and $N_i$ bits, respectively, or

$$(3) \quad \gamma = a_{,,}$$

where

- $a$ represents a real-valued amplitude, selected from $\{0,1\}$, or

$$(4) \quad \gamma = ab\varphi,$$

where

- $a$ represents a real-valued differential amplitude, quantized with $N_a$ bits, and
- $b$ represents a common amplitude over a subset of combining coefficients (e.g., subset of combining coefficients with respect to beams and/or delays and/or Doppler-frequencies and/or polarization), quantized with $N_b$ bits, where $N_a \leq N_b$, and
- $\varphi = \exp(-j2\pi c)$ is a phase which is represented by a BPSK, or QPSK, or 8PSK, and any higher-order constellation, or

$$(5) \quad \gamma = abc\varphi,$$

where

- *a* represents a real-valued differential amplitude, quantized with $N_a$ bits, and
- *b* represents a first common amplitude over a first subset of combining coefficients (e.g., subset of combining coefficients with respect to beams and/or delays and/or Doppler-frequencies and/or polarization), quantized with $N_b$ bits, where $N_a \leq N_b$,
- *c* represents a second common amplitude over a second subset of combining coefficients (e.g., subset of combining coefficients with respect to beams and/or delays and/or Doppler-frequencies and/or polarization), quantized with $N_c$ bits, where $N_a \leq N_c$, and
- $\varphi = \exp(-j2\pi c)$ is a phase which is represented by a BPSK, or QPSK, or 8PSK, and any higher-order constellation, or

$$(6) \quad \gamma = abcd\varphi,$$

where

- *a* represents a real-valued differential amplitude, quantized with $N_a$ bits, and
- *b* represents a first common amplitude over a first subset of combining coefficients (e.g., subset of combining coefficients with respect to beams and/or delays and/or Doppler-frequencies and/or polarization), quantized with $N_b$ bits, where $N_a \leq N_b$,
- *c* represents a second common amplitude over a second subset of combining coefficients (e.g., subset of combining coefficients with respect to beams and/or delays and/or Doppler-frequencies and/or polarization), quantized with $N_c$ bits, where $N_a \leq N_c$, and
- *d* represents a third common amplitude over a third subset of combining coefficients (e.g., subset of combining coefficients with respect to beams and/or delays and/or Doppler-frequencies and/or polarization), quantized with $N_d$ bits, where $N_a \leq N_d$, and
- $\varphi = \exp(-j2\pi c)$ is a phase which is represented by a BPSK, or QPSK, or 8PSK, and any higher-order constellation.

**Coefficient normalization and strongest coefficient indication**

In accordance with embodiments, the combining coefficients $\gamma$ (without indexation for simplicity) are normalized per layer with respect to a strongest combining coefficient such that the amplitude of the strongest normalized combining coefficient is 1 (or any other reference value). Since the normalized strongest coefficient is always given by the same value, the UE is configured not to report the strongest coefficient (bit values for the amplitude and phase of the quantized coefficient) and to indicate per layer the strongest coefficient by a strongest coefficient indicator in the CSI report.

For example, the strongest coefficient indicator associated with r-th layer is given by $\lceil \log_2(NZ_r) \rceil$ or $\max_r \lceil \log_2(NZ_r) \rceil$ or $\lceil \log_2(K^{(r)}) \rceil$ or $\max_r \lceil \log_2(K^{(r)}) \rceil$ bit indicator and the CSI part 1 contains the selected number of non-zero combining coefficients (NNZCC) for each of the RI layers. Here, $NZ_r$ represents the number of non-zero components indicated for the r-th layer in CSI part 1, and $K^{(r)}$ represents the maximum number of non-zero components configured per layer.

**Extension to CQI value prediction:**

According to embodiments, the UE may be configured to predict a CQI value for time-instant/slot "$n + K$", where $n$ denotes the current time-instant/slot, and $K$ denotes the relative time difference with respect to the current time-instant/slot $n$.

In one embodiment, the UE uses in a first step a high resolution parameter estimation algorithm, such as RIMAX (see reference [5]), to estimate parameters of a channel model directly from the multi-dimensional channel matrix/tensor $\mathcal{H}$. For example, the time-variant channel model impulse response may be defined by a number of channel taps, where each channel tap is parameterized with a channel gain, Doppler-frequency shift and a delay. The time-variant frequency-selective MIMO channel model frequency-domain response between the *i*-th gNB antenna and the *j*-th UE antenna may be expressed by

$$h_{i,j}(t,w) = \sum_{m=0}^{M-1} h_{i,j}(m)e^{j2\pi f_m t}e^{-j\frac{2\pi w \tau_m}{W}},$$

where

- $M$ is the number of channel delays,
- $h_{i,j}(m)$ is the $m$-th path gain with associated Doppler-frequency shift $f_m$ and channel delay $\tau_m$,
- $t$ represent the time instant,
- $w$ denotes the subcarrier index, and
- $W$ denotes the total number of subcarriers.

In this embodiment, a non-polarimetric channel model is assumed, where the channel delays are identical for all links $(i,j)$ of the MIMO channel.

It is noted that the coefficients of $H(t,w)$ may also be calculated directly in a non-parameterized form from the MIMO channel tensor $\mathcal{H}$ by using a linear block-filtering approach such as least squares or minimum-mean-squared-error (MMSE) filtering (see references [6] and [7]). In this case, the channel predictor is formed by a weighted sum of the MIMO channel matrix/tensor $\mathcal{H}$.

In a second step, the parameterized channel model and the selected Doppler/Doppler-beam/Doppler-delay/Doppler-delay-beam composite precoder $W^{(r)}$ ($r$ = 1,..,$R$) (see equations (1)-(4) above) are used to calculate a parameterized precoded time-variant MIMO channel model frequency-domain response as

$$H_{prec}(t,w) = H(t,w)\big[W^{(1)}(t,w),\ W^{(2)}(t,w),\dots,W^{(R)}(t,w)\big],$$

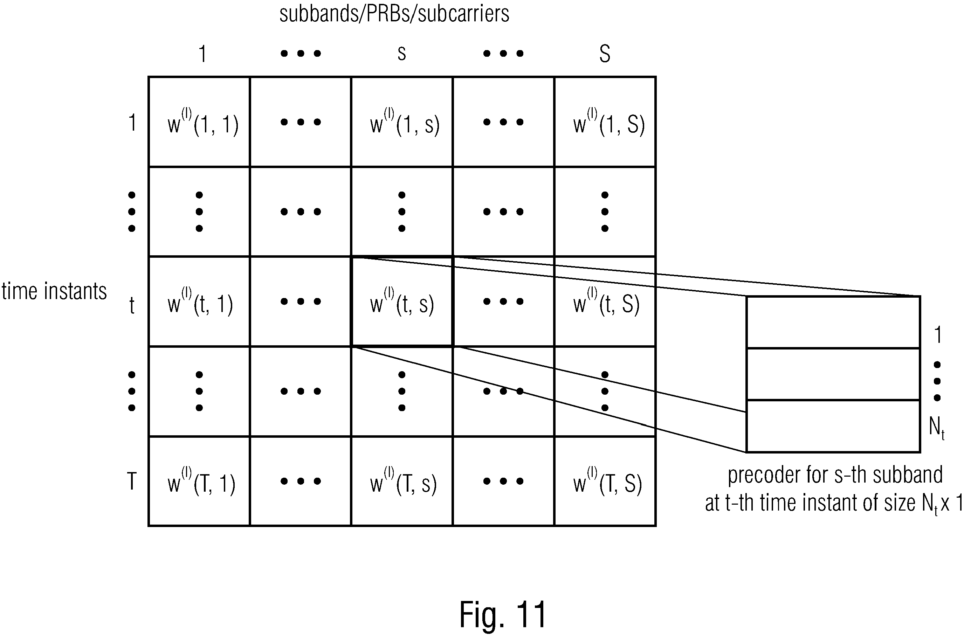

where the $(i,j)$ entry of $[H(t,w)]_{i,j} = h_{i,j}(t,w)$, and $W^{(r)}(t,w)$ is the $t$-th block and $w$-th column of $W^{(l)}$ (see Fig. 11 illustrating a composite Doppler-delay-beam precoder matrix of size $N_t \cdot T \times S$).

In a third step, the UE uses the parameterized precoded MIMO channel model response to calculate a CQI value for a future time instant $n + K$, i.e., the CQI($n + K$) is expressed as a function of $H_{prec}(n + K, w)$.

The UE may use the above parameterized precoded MIMO channel response also to predict $K$ future CQI values (multiple CQI reporting) for the "$n + k$" ($k$ = 0,..,$K$) future time instant. The $K$ predicted CQI values may be used to calculate differential predicted CQI values by reducing the $K$ predicted CQI values by the "average" CQI value. The predicted single CQI value, or predicted $K$ CQI values, or predicted $K$ differential CQI values is/are reported to the gNB.

As mentioned above, other examples operating on the basis of repeated reference signals may use other precoders or other techniques to determine the CSI feedback based on the repeated reference signals and to report the determined CSI feedback. Thus, further examples provide a communication device for providing a channel state information, CSI, feedback in a wireless communication system, wherein the communication device receives a CSI-RS resource configuration including a higher layer (e.g., RRC) parameter, e.g., referred to as CSI-RS-BurstDuration, indicating a time-domain-repetition of the reference signals, e.g., in terms of a number of consecutive slots the reference signals are repeated in. The communication device determines the CSI feedback based on the repeated reference signals and reports the determined CSI feedback.

**Precoder application at gNB:**

The UE may assume that, for CQI, and/or RI, and/or PMI calculation, the gNB applies the Doppler-delay-beam precoder calculated with respect to equation (1) above, to the PDSCH signals on antenna ports {1000,1008 + $v$ - 1} for $v$ = $R$ layers as

$$\begin{bmatrix} y^{(t,3000)}(i) \\ \vdots \\ y^{(t,3000+P-1)}(i) \end{bmatrix} = W(t,i)\begin{bmatrix} x^{(t,0)}(i) \\ \vdots \\ x^{(t,v-1)}(i) \end{bmatrix},$$

where

- $[x^{(t,0)}(i),...,x^{(t,v-1)}(i)]^T$ is a symbol vector of PDSCH symbols from the layer mapping defined in Subclause 7.3.1.4 of TS 38.211 (see reference [1]), $P \in \{1,2,4,8,12,16,24,32\}$,
- $x^{(t,u)}(i)$ is the $i$-th symbol of layer $\mu$ at time instant $t$,
- $y^{(t,u)}(i)$ is the precoded symbol transmitted on antenna port $u$ at time instant $t$, and
- $\boldsymbol{W}(t,i) = [\boldsymbol{W}^{(1)}(t,i),...,\boldsymbol{W}^{(R)}(t,i)]$ is the predicted precoder matrix calculated according to equation (1) with $\boldsymbol{W}^{(r)}(t,i)$ being the $t$-th block and $i$-th column of $\boldsymbol{W}^{(r)}$.

The corresponding PDSCH signals $[y^{(t,3000)}(i) \cdots y^{(t,3000+P-1)}(i)]$ transmitted on antenna ports [3000,3000 + $P$ - 1] have a ratio of, energy per resource element, EPRE, to CSI-RS EPRE equal to the ratio given in Subclause 4.1 of TS 38.214 (see reference [2]).

It is noted that for the current PDSCH transmission scheme as described in (see reference [2]) the precoder matrix is kept constant over time until it is updated by a reported PMI. In contrast, the approach described above takes into account the channel variations by updating the precoder matrix continuously over time without instantaneous PMI reporting.

## General

In accordance with embodiments, the wireless communication system may include a terrestrial network, or a non-terrestrial network, or networks or segments of networks using as a receiver an airborne vehicle or a spaceborne vehicle, or a combination thereof.

In accordance with embodiments, the UE may comprise one or more of a mobile or stationary terminal, an IoT device, a ground based vehicle, an aerial vehicle, a drone, a building, or any other item or device provided with network connectivity enabling the item/device to communicate using the wireless communication system, like a sensor or actuator.

In accordance with embodiments, the base station may comprise one or more of a macro cell base station, or a small cell base station, or a spaceborne vehicle, like a satellite or a space, or an airborne vehicle, like a unmanned aircraft system (UAS), e.g., a tethered UAS, a lighter than air UAS (LTA), a heavier than air UAS (HTA) and a high altitude UAS platforms (HAPs), or any transmission/reception point (TRP) enabling an item or a device provided with network connectivity to communicate using the wireless communication system.

The embodiments of the present invention have been described above with reference to a communication system employing a rank 1 or layer 1 communication. However, the present invention is not limited to such embodiments and may also be implemented in a communication system employing a higher rank or layer communication. In such embodiments, the feedback includes the delays per layer and the complex precoder coefficients per layer.

With regard to the above-described embodiments of the various aspects of the present invention, it is noted that they have been described in an environment in which a communication is between a transmitter, like a gNB or a UE, and a receiver, like a UE and a gNB. However, the invention is not limited to such a communication, rather, the above-described principles may equally be applied for a device-to-device communication, like a D2D, V2V, V2X communication. In such scenarios, the communication is over a sidelink between the respective devices. The transmitter is a first UE and the receiver is a second UE communicating using the sidelink resources.

The embodiments of the present invention have been described above with reference to a communication system in which the transmitter is a base station serving a user equipment, and the communication device or receiver is the user equipment served by the base station. However, the invention is not limited to such a communication, rather, the above-described principles may equally be applied for a device-to-device communication, like a D2D, V2V, V2X communication. In such scenarios, the communication is over a sidelink between the respective devices. The transmitter is a first UE and the receiver is a second UE communicating using the sidelink resources. Thus, the present invention is not limited to precoding between a UE and a base station, but is equally applicable to, e.g., sidelink-based precoding for UE to UE communications.

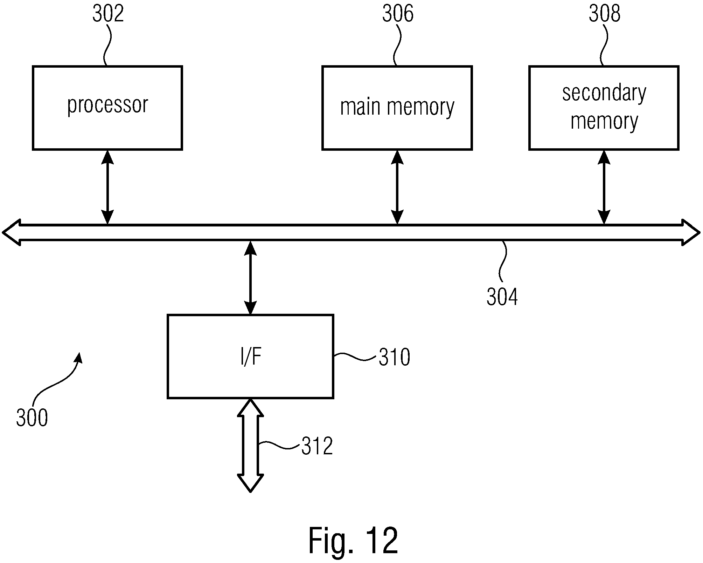

Although some aspects of the described concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus. Various elements and features of the present invention may be implemented in hardware using analog and/or digital circuits, in software, through the execution of instructions by one or more general purpose or special-purpose processors, or as a combination of hardware and software. For example, embodiments of the present invention may be implemented in the environment of a computer system or another processing system. Fig. 12 illustrates an example of a computer system 350. The units or modules as well as the steps of the methods performed by these units may execute on one or more computer systems 350. The computer system 350 includes one or more processors 352, like a special purpose or a general purpose digital signal processor. The processor 352 is connected to a communication infrastructure 354, like a bus or a network. The computer system 350 includes a main memory 356, e.g., a random access memory (RAM), and a secondary memory 358, e.g., a hard disk drive and/or a removable storage drive. The secondary memory 358 may allow computer programs or other instructions to be loaded into the computer system 350. The computer system 350 may further include a communications interface 360 to allow software and data to be transferred between computer system 350 and external devices. The communication may be in the from electronic, electromagnetic, optical, or other signals capable of being handled by a communications interface. The communication may use a wire or a cable, fiber optics, a phone line, a cellular phone link, an RF link and other communications channels 362.

The terms "computer program medium" and "computer readable medium" are used to generally refer to tangible storage media such as removable storage units or a hard disk installed in a hard disk drive. These computer program products are means for providing software to the computer system 350. The computer programs, also referred to as computer control logic, are stored in main memory 356 and/or secondary memory 358. Computer programs may also be received via the communications interface 360. The computer program, when executed, enables the computer system 350 to implement the present invention. In particular, the computer program, when executed, enables processor 352 to implement the processes of the present invention, such as any of the methods described herein. Accordingly, such a computer program may represent a controller of the computer system 350. Where the disclosure is implemented using software, the software may be stored in a computer program product and loaded into computer system 350 using a removable storage drive, an interface, like communications interface 360.

The implementation in hardware or in software may be performed using a digital storage medium, for example cloud storage, a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention may be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier. In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. A further embodiment of the inventive method is, therefore, a data stream or a sequence of signals representing the computer program for performing one of the methods described herein. The data stream or the sequence of signals may for example be configured to be transferred via a data communication connection, for example via the Internet. A further embodiment comprises a processing means, for example a computer, or a programmable logic device, configured to or adapted to perform one of the methods described herein. A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein are apparent to others skilled in the art. It is the intent, therefore, to be limited only by the scope of the impending patent claims and not by the specific details presented by way of description and explanation of the embodiments herein.

**References:**

[1] 3GPP TS 38.211 V15.1.0, "3rd Generation Partnership Project; Technical Specification Group Radio Access Network; NR; Physical channels and modulation (Release 15), March 2018.

[2] 3GPP TS 38.214 V15.1.0, "3rd Generation Partnership Project; Technical Specification Group Radio Access Network; NR; Physical layer procedures for data (Release 15), March 2018.

[3] K. Manolakis, S. Jaeckel, V. Jugnickel, and V. Braun, "Channel Prediction by Doppler-Delay Analysis and Benefits for Base Station Cooperation," in 77th IEEE Vehicular Technology Conference, Jun 2013.

[4] 3GPP TS 38.331 V15.1.0, "3rd Generation Partnership Project; Technical Specification Group Radio Access Network; NR; Radio Resource Control (RRC); Protocol specification (Release 15), March 2018.

[5] R. S. Thomä, M. Landmann, and A. Richter, "RIMAX-A maximum likelihood framework for parameter estimation in multidimensional channel sounding." Proceedings of the International Symposium on Antennas and Propagation (ISAP'04). 2004.

[6] I. Barhumi, G. Leus, and M. Moonen, "Optimal training design for MIMO OFDM systems in mobile wireless channels," IEEE Trans. Signal Process, vol. 51, no. 6, pp. 1615-1624, Jun. 2003.

[7] P. Hoeher, S. Kaiser, and P. Robertson, "Two-dimensional pilot-symbol-aided channel estimation by Wiener filtering," in Proc. IEEE ICASSP-97, Munich, Germany, Apr. 1997, pp. 1845-1848.

**Claims**

1. A communication device for providing channel state information, CSI, feedback in a wireless communication system, wherein

   the communication device is to receive from a transmitter a radio signal via a time-variant, frequency-selective channel, the radio signal including reference signals according to a reference signal configuration comprising one or more ports, and signals comprising the reference signal configuration;

   the communication device is to estimate the channel using measurements on the reference signals on the radio channel, the reference signals provided over a configured number of frequency and time domain resources,

   the communication device is to

   • select a precoder matrix ($W$),
   • calculate either one or more of a channel quality indicator, CQI, and/or a precoder matrix indicator, PMI, and/or a rank indicator, RI, using the explicit CSI and the precoder matrix ($W$), and
   • report to the transmitter the CSI feedback including either one or more of the CQI, and/or the PMI and/or the RI, wherein the PMI and RI are used to indicate the precoder matrix for the configured frequency resources, time domain resources and one or more ports, and

   wherein the precoder matrix includes

   • a single codebook comprising one or more Doppler-frequency components of the precoder, or
   • two codebooks, a first codebook and a second codebook, wherein the first codebook comprises one or more Doppler-frequency components of the precoder, and wherein the second codebook comprises one or more delay components of the precoder or one or more spatial beam components of the precoder, or
   • three codebooks, a first codebook, a second codebook and a third codebook, wherein the first codebook comprises one or more Doppler-frequency components of the precoder, wherein the second codebook comprises one or more delay components of the precoder, and wherein the third codebook comprises one or more spatial beam components of the precoder.

2. The communication device of claim 1, wherein, in case the precoder matrix includes two codebooks, the second codebook comprises one or more spatial beam components of the precoder.

3. The communication device of claim 1, wherein, in case the precoder matrix includes two codebooks, the second codebook comprises one or more one or more delay components of the precoder.

4. The communication device of any one of the preceding claims, wherein the communication device is configured to

   • report a single CQI value for a configured number of subbands using the selected precoder matrix $W^{(r)}$ for the configured time and frequency domain resources, or
   • report a CQI value per subband, e.g., per CQI subband, using the selected precoder matrix $W^{(r)}$ for the configured time and frequency domain resources.

5. The communication device of any one of the preceding claims, wherein the communication device is to

   • select per transmission layer or for a subset of transmission layers, a subset of Doppler-frequency components vectors from a Doppler-frequency codebook, and
   • indicate the selected Doppler-frequency vectors from the Doppler-frequency codebook in the CSI report by a Doppler-frequency basis subset indicator per transmission layer or for a subset of transmission layers.

6. The communication device of claim 5, wherein

   • the Doppler-frequency basis subset indicator is given by a bitmap, where each bit in the bitmap is associated with a Doppler-frequency vector from the Doppler-frequency codebook, or

   • the Doppler-frequency basis subset indicator is given by a $\left\lceil \log_2 \binom{N_4}{F} \right\rceil$ bit indicator, where $N_4$ denotes the number of vectors in the Doppler-frequency codebook, and $F$ denotes the number of selected Doppler-frequency components.

7. The communication device of claim 5 or 6, wherein the precoder matrix includes the Doppler-frequency codebook and a delay codebook, the Doppler-frequency basis subset indicator per layer is identical for all delays of the layer, and the communication device is to indicate the selected Doppler-frequencies components per delay from the Doppler-frequency basis subset indicator by a sub-Doppler-frequency basis subset indicator.

8. The communication device of claim 7, wherein

   • the sub-Doppler-frequency basis subset indicator is represented by a bitmap, where each bit in the bitmap is associated with a Doppler-frequency vector of the Doppler-frequency basis subset indicator, or

   • wherein the sub-Doppler-frequency basis subset indicator is represented by a $\left\lceil \log_2 \binom{A}{B} \right\rceil$ bit indicator, where $A$ denotes the number of selected Doppler-frequency components of the Doppler-frequency basis subset indicator, and $B$ denotes the number of selected Doppler-frequency components of the sub-Doppler-frequency basis subset indicator, and wherein the communication device is to indicate the selected Doppler-frequency components $B$ in the CSI report.

9. The communication device of claim 7 or 8, wherein the sub-Doppler-frequency basis subset indicator for a subset or all delays is identical, and the communication device is to report only a single sub-Doppler-frequency basis subset indicator per delay and per polarization.

10. The communication device of any one of the preceding claims, wherein the precoder matrix includes a Doppler-frequency codebook and a delay codebook, and the communication device is to

    • select per transmission layer or for a subset of transmission layers, a subset of delay vectors from the delay codebook, and
    • indicate the selected delay vectors from the delay codebook in the CSI report by a delay basis subset indicator per transmission layer or for a subset of transmission layers.

11. The communication device of claim 10, wherein

    • the delay basis subset indicator for each layer is given by a bitmap, where each bit in the bitmap is associated with a delay vector from the delay codebook, or

    • the delay basis subset indicator is given by a $\left\lceil \log_2 \binom{N_3}{D} \right\rceil$ bit indicator, where $N_3$ denotes the number of vectors in the delay codebook, and $D$ denotes the number of delay.

12. The communication device of any one of the preceding claims, wherein the precoder matrix includes a Doppler-frequency codebook and a beam codebook, and the communication device is to

    • select per transmission layer or for a subset or for all transmission layers, a subset of beam vectors from the beam codebook, and
    • indicate the selected beam vectors from the beam codebook in the CSI report by a beam basis subset indicator per transmission layer or for the subset of transmission layers or for all transmission layers.

13. The communication device of claim 12, wherein

   • the beam basis subset indicator is given by a bitmap, where each bit in the bitmap is associated with a beam vector from the beam codebook, or

   • the beam basis subset indicator is given by a $\left\lceil \log_2 \binom{N_t}{L} \right\rceil$ bit indicator, where $N_t$ denotes the number of vectors in the beam codebook, and $L$ denotes the number of beam components.

14. The communication device of any one of the preceding claims, wherein the communication device is to

   • select $K^{(r)}$ or less than $K^{(r)}$ non-zero combining coefficients for the r-th layer of the precoder matrix, or
   • select $K$ or less than $K$ non-zero combining coefficients for all layers of the precoder matrix,
   • report the selected non-zero combining coefficients for all layers of the precoder matrix, and
   • indicate the selected coefficients in the CSI report.

15. The communication device of claim 14, wherein the selected non-zero coefficients for the r-th layer are indicated by a bitmap, and wherein each bit in the bitmap is associated with a selected Doppler-frequency component from the Doppler-frequency subset basis indicator, with a selected delay component from the delay subset basis indicator, if a delay codebook is configured, and with a selected beam component from the beam subset basis indicator, if a beam codebook is configured.

16. The communication device of claim 14 or 15, wherein the selected non-zero coefficients for the r-th layer are indicated

   by a $\left\lceil \log_2 \binom{A}{B} \right\rceil$ bit indicator, where $A$ denotes a combination of the product of the selected number of Doppler-frequency components from the Doppler-frequency subset basis indicator, the selected number of delay components from the delay subset basis indicator, if a delay codebook is configured, and the selected number of beam components from the beam subset basis indicator, if a beam codebook is configured, and $B$ denotes the number of selected non-zero coefficients of the r-th layer.

17. The communication device of any one of claims 14 to 16, wherein the communication device is configured, e.g., by a base station or another network entity, with the parameter $K^{(r)}$, or $K$ representing the maximum number of non-zero coefficients to be reported for the r-th layer, or representing the maximum number of non-zero coefficients to be reported for all layers of the CSI matrix, wherein the communication device may be configured with different or identical $K^{(r)}$ per layer or per layer-group or per subset of layers.

18. The communication device of any one of the preceding claims, wherein
   the communication device is to select the precoder matrix indicator, PMI, for reporting, and
   the CSI report includes two parts, wherein a first part has a fixed size and indicates the size of the payload of the second part, wherein the two CSI parts may be independently encoded.

19. The communication device of any one of the preceding claims, wherein the second CSI part has a varying payload size and may contain at least one or more of the basis subset indicators for the different codebooks, the information on the transmission rank, and quantized combining coefficients for all layers.

20. The communication device of any one of the preceding claims, wherein the communication device and/or the transmitter comprises one or more of a mobile terminal, or stationary terminal, or cellular IoT-UE, or an IoT device, or a ground based vehicle, or an aerial vehicle, or a drone, or a moving base station, or road side unit, or a building, or a macro cell base station, or a small cell base station, or a road side unit, or a UE, or a remote radio head, or an AMF, or an SMF, or a core network entity, or a network slice as in the NR or 5G core context, or any transmission/reception point (TRP) enabling an item or a device to communicate using the wireless communication network, the item or device being provided with network connectivity to communicate using the wireless communication network.

21. A wireless communication network, comprising one or more communication devices of any one of the preceding claims.

**22.** A method for providing channel state information, CSI, feedback in a wireless communication system, the method comprising:

receiving, by a communication device of the wireless communication system, from a transmitter a radio signal via a time-variant, frequency-selective channel, the radio signal including reference signals according to a reference signal configuration comprising one or more ports, and signals comprising the reference signal configuration,

estimating, by the communication device, the channel using measurements on the reference signals on the radio channel, the reference signals provided over a configured number of frequency and time domain resources,

selecting, by the communication device, a precoder matrix ($W$),

calculating, by the communication device, either one or more of a channel quality indicator, CQI, and/or a precoder matrix indicator, PMI, and/or a rank indicator, RI, using the explicit CSI and the precoder matrix ($W$), and

reporting, by the communication device, to the transmitter the CSI feedback including either one or more of the CQI, and/or the PMI and/or the RI, wherein the PMI and RI are used to indicate the precoder matrix for the configured frequency resources, time domain resources and one or more ports, and

wherein the precoder matrix includes

• a single codebook comprising one or more Doppler-frequency components of the precoder, or
• two codebooks, a first codebook and a second codebook, wherein the first codebook comprises one or more Doppler-frequency components of the precoder, and wherein the second codebook comprises one or more delay components of the precoder or one or more spatial beam components of the precoder, or
• three codebooks, a first codebook, a second codebook and a third codebook, wherein the first codebook comprises one or more Doppler-frequency components of the precoder, wherein the second codebook comprises one or more delay components of the precoder, and wherein the third codebook comprises one or more spatial beam components of the precoder.

**23.** A non-transitory computer program product comprising a computer readable medium storing instructions which, when executed on a computer, perform the method of claim 22.

Fig. 1

Fig. 2

Fig. 3

gNB                                    UE

| Send to UE CSI-RS configuration and CSI report configuration |—| CSI measurement on downlink CSI-RS over a number of time resources |~ 252

250

Construction of channel information matrix or channel information tensor ~ 254

Selection of precoder matrix using a performance metric ~ 256

Calculation of CQI, predicted CQI, or predicted differential CQI, and/or RI and PMI (if configured) ~ 258

| Multi-user precoder matrix construction including precoder matrix prediction |— CSI reporting

262                                    260

Fig. 4

CSI-RS transmission slots

slot

0

10

Fig. 5(a)

CSI-RS transmission slots

slot

0

10

Fig. 5(b)

EP 3 780 410 A1

```
- - ASN1START
- - TAG-CSI-RS-BURSTDURATION-START

CSI-RS-BURSTDURATION : : = ENUMERATED {
    burstSlots0, burstSlots1, burstSlots2, burstSlots3,
burstSlots4, burstSlots5
}

- - TAG-CSI-RS-BURSTDURATION-STOP
- - ASN1STOP
```

# Fig. 6

antenna ports

N

S
subcarriers

T
time instants

Fig. 7

Doppler index/vector

$f_0^{(l)}$  $f_1^{(l)}$  $f_0^{(l)}$  $f_1^{(l)}$  $f_0^{(l)}$  $f_1^{(l)}$  $f_0^{(l)}$  $f_1^{(l)}$

associated feedback information (represented by the bitmap)
of selected delay vectors per beam and the selected
Doppler vectors per beam and per delay

| | 0 | 1 | 0 | 1 | 0 | 1 | 0 | 1 | |
|---|---|---|---|---|---|---|---|---|---|
| 1 | 0 | 0 | 0 | 0 | 0 | 0 | 0 | 0 | $(.)$ |
| 0 | 0 | 0 | 0 | 0 | 0 | 0 | 1 | 1 | $(d_3^{(l)}, f_0^{(l)}, f_1^{(l)})$ |
| 1 | 0 | 0 | 1 | 1 | 1 | 0 | 0 | 0 | $(d_1^{(l)}, f_0^{(l)}, f_1^{(l)}), (d_2^{(l)}, f_0^{(l)})$ |
| 0 | 1 | 1 | 0 | 0 | 1 | 0 | 0 | 1 | $(d_0^{(l)}, f_0^{(l)}, f_1^{(l)}), (d_2^{(l)}, f_0^{(l)}), (d_3^{(l)}, f_1^{(l)})$ |

P2, P1 — beam index for two polarizations

0     1     2     3

$d_0^{(l)}$  $d_1^{(l)}$  $d_2^{(l)}$  $d_3^{(l)}$

delay index/vector

Fig. 8(a)          Fig. 8(b)

$PMI = \{i_1, i_2\}$

first PMI:

$i_1 =$ 
$$\begin{cases} i_{1,1}\text{: beam/port basis subset indicator indicating indices of selected beam vectors } b \\ i_{1,2}\text{: delay indicator basis subset indicating indices of selected delay vectors } d \\ i_{1,3}\text{: Doppler-frequency basis subset indicator indicating indices of selected Doppler-frequency vectors } f \end{cases}$$

second PMI:

$$i_2 = \begin{cases} i_{2,1}\text{: amplitude values of selected combining coefficients } \gamma \\ i_{2,2}\text{: phase values of selected combining coefficients } \gamma \end{cases}$$

<p style="text-align:center">Fig. 9</p>

precoder for l-th layer

AP 0
AP 1
AP 2
AP 3

AP 8
AP 9
AP 10
AP 11

AP 4
AP 5
AP 6
AP 7

AP 12
AP 13
AP 14
AP 15

AP 0

precoder for AP 0 to AP 7 (first polarization)

$$p(l) \cdot \sum_{u=0}^{U^{(l)}-1} \sum_{d=0}^{D_u^{(l)}-1} \sum_{v=0}^{F_{d,u}^{(l)}-1} \gamma_{1,u,d,v}^{(l)} f_{1,u,d,v}^{(l)} \otimes d_{1,u,d}^{(l)T} \otimes b_u^{(l)}$$

AP 7

AP 8

precoder for AP 8 to AP 15 (second polarization)

$$p(l) \cdot \sum_{u=0}^{U^{(l)}-1} \sum_{d=0}^{D_u^{(l)}-1} \sum_{v=0}^{F_{d,u}^{(l)}-1} \gamma_{2,u,d,v}^{(l)} f_{2,u,d,v}^{(l)} \otimes d_{2,u,d}^{(l)T} \otimes b_u^{(l)}$$

AP 15

AP ... antenna port

Fig. 10

subbands/PRBs/subcarriers

| | 1 | $\cdots$ | s | $\cdots$ | S |
|---|---|---|---|---|---|
| 1 | $w^{(l)}(1, 1)$ | $\cdots$ | $w^{(l)}(1, s)$ | $\cdots$ | $w^{(l)}(1, S)$ |
| $\vdots$ | $\vdots$ | $\cdots$ | $\vdots$ | $\cdots$ | $\vdots$ |
| t | $w^{(l)}(t, 1)$ | $\cdots$ | $w^{(l)}(t, s)$ | $\cdots$ | $w^{(l)}(t, S)$ |
| $\vdots$ | $\vdots$ | $\cdots$ | $\vdots$ | $\cdots$ | $\vdots$ |
| T | $w^{(l)}(T, 1)$ | $\cdots$ | $w^{(l)}(T, s)$ | $\cdots$ | $w^{(l)}(T, S)$ |

time instants

1
$\vdots$
$N_t$

precoder for s-th subband
at t-th time instant of size $N_t \times 1$

Fig. 11

EP 3 780 410 A1

Fig. 12

EP 3 780 410 A1

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FRAUNHOFER IIS ET AL: "Further Enhancements on Type-II CSI Reporting: Doppler-domain Approach", 3GPP DRAFT; R1-1904219, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Xi'an, China; 20190408 - 20190412 7 April 2019 (2019-04-07), XP051699548, Retrieved from the Internet: URL:http://www.3gpp.org/ftp/Meetings%5F3GP P%5FSYNC/RAN1/Docs/R1%2D1904219%2Ezip [retrieved on 2019-04-07] | 1,2,5, 12,14, 20-23 | INV. H04B7/0456 H04B7/06 |
| Y | * the whole document * | 3,4,6, 10,13, 15-19 | |
| A | | 7-9,11 | |
| | ----- | | TECHNICAL FIELDS SEARCHED (IPC) |
| Y | FRAUNHOFER IIS ET AL: "Enhancements on Type-II CSI reporting", 3GPP DRAFT; R1-1813130, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20181112 - 20181116 11 November 2018 (2018-11-11), XP051555112, Retrieved from the Internet: URL:http://www.3gpp.org/ftp/Meetings%5F3GP P%5FSYNC/RAN1/Docs/R1%2D1813130%2Ezip [retrieved on 2018-11-11] * Section 2.1 * | 3,10 | H04B |

-----

-/--

The present search report has been drawn up for all claims

| Place of search | Date of completion of the search | Examiner |
|---|---|---|
| Munich | 12 December 2019 | Ganis, Alexander |

EPO FORM 1503 03.82 (P04C01)

page 1 of 3

Europäisches
Patentamt

European
Patent Office

Office européen
des brevets

# EUROPEAN SEARCH REPORT

Application Number

EP 19 19 1582

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | QUALCOMM INCORPORATED: "Remaining details of feedback for TM9", 3GPP DRAFT; R1-110919 REMAINING DETAILS OF FEEDBACK FOR TM9, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Taipei, Taiwan; 20110121 - 20110125, 15 February 2011 (2011-02-15), XP050599146, [retrieved on 2011-02-15] * Section 4 * | 4 | |
| Y | NOKIA ET AL: "Remaining details on CSI reporting for Type II and Type I codebook", 3GPP DRAFT; R1-1718510, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, CZ; 20171009 - 20171013 8 October 2017 (2017-10-08), XP051341692, Retrieved from the Internet: URL:http://www.3gpp.org/ftp/Meetings_3GPP_SYNC/RAN1/Docs/ [retrieved on 2017-10-08] * Section 2.1 * | 18,19 | TECHNICAL FIELDS SEARCHED (IPC) |

-/--

The present search report has been drawn up for all claims

| Place of search | Date of completion of the search | Examiner |
|---|---|---|
| Munich | 12 December 2019 | Ganis, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 3

Europäisches
Patentamt

European
Patent Office

Office européen
des brevets

**EUROPEAN SEARCH REPORT**

Application Number

EP 19 19 1582

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SAMSUNG: "Enhancements on MIMO for NR", 3GPP DRAFT; RP-191187 SR FOR RAN_84_NR-EMIMO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN, no. Newport Beach, USA; 20190603 - 20190607 2 June 2019 (2019-06-02), XP051747395, Retrieved from the Internet: URL:http://www.3gpp.org/ftp/Meetings%5F3GP P%5FSYNC/RAN/Docs/RP%2D191187%2Ezip [retrieved on 2019-06-02] * section 2.1.1 * ----- | 6,13, 15-17 | |

TECHNICAL FIELDS
SEARCHED      (IPC)

The present search report has been drawn up for all claims

| Place of search | Date of completion of the search | Examiner |
|---|---|---|
| Munich | 12 December 2019 | Ganis, Alexander |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&  : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2018052255 A1

### Non-patent literature cited in the description

- 3rd Generation Partnership Project; Technical Specification Group Radio Access Network; NR; Physical channels and modulation (Release 15). *3GPP TS 38.211 V15.1.0,* March 2018
- 3rd Generation Partnership Project; Technical Specification Group Radio Access Network; NR; Physical layer procedures for data (Release 15). *3GPP TS 38.214 V15.1.0,* March 2018
- **K. MANOLAKIS ; S. JAECKEL ; V. JUGNICKEL ; V. BRAUN.** Channel Prediction by Doppler-Delay Analysis and Benefits for Base Station Cooperation. *77th IEEE Vehicular Technology Conference,* June 2013
- 3rd Generation Partnership Project; Technical Specification Group Radio Access Network; NR; Radio Resource Control (RRC); Protocol specification (Release 15. *3GPP TS 38.331 V15.1.0,* March 2018
- **R. S. THOMÄ ; M. LANDMANN ; A. RICHTER.** RIMAX-A maximum likelihood framework for parameter estimation in multidimensional channel sounding. *Proceedings of the International Symposium on Antennas and Propagation (ISAP'04),* 2004
- **I. BARHUMI ; G. LEUS ; M. MOONEN.** Optimal training design for MIMO OFDM systems in mobile wireless channels. *IEEE Trans. Signal Process,* June 2003, vol. 51 (6), 1615-1624
- **P. HOEHER ; S. KAISER ; P. ROBERTSON.** Two-dimensional pilot-symbol-aided channel estimation by Wiener filtering. *Proc. IEEE ICASSP-97,* April 1997, 1845-1848